(19) Europäisches Patentamt
European Patent Office
Office européen des brevets

(11) **EP 4 567 452 A1**

(12) **EUROPEAN PATENT APPLICATION**

(43) Date of publication:
**11.06.2025 Bulletin 2025/24**

(21) Application number: **24191763.2**

(22) Date of filing: **30.07.2024**

(51) International Patent Classification (IPC):
**G01S 7/03** (2006.01)      **G01S 13/42** (2006.01)
**G01S 13/931** (2020.01)      **G01S 7/28** (2006.01)

(52) Cooperative Patent Classification (CPC):
**G01S 7/03; G01S 7/2813; G01S 13/42;**
**G01S 13/931**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **06.12.2023 KR 20230175886**

(71) Applicant: SAMSUNG ELECTRONICS CO., LTD.
Yeongtong-gu
Suwon-si, Gyeonggi-do 16677 (KR)

(72) Inventors:
• **KHANG, Seung Tae**
  **16678 Suwon-si (KR)**
• **KIM, Ghoo**
  **16678 Suwon-si (KR)**
• **KIM, Jong-Sok**
  **16678 Suwon-si (KR)**
• **JEON, Jinyong**
  **16678 Suwon-si (KR)**

(74) Representative: **Arnold & Siedsma**
**Bezuidenhoutseweg 57**
**2594 AC The Hague (NL)**

(54) **METHOD AND APPARATUS WITH RADAR SIGNAL PROCESSING**

(57)      A method and apparatus for radar signal processing comprise determining a first elevation angle with respect to the target object based on a first component of an initial radar signal received through an array antenna of a radar sensor, determining an angular window based on the first elevation angle, generating a second direction of arrival (DOA) estimation spectrum by applying the angular window to a first DOA estimation spectrum generated based on a second component of the initial radar signal, and determining a second elevation angle with respect to the target object based on the second DOA estimation spectrum.

FIG. 10

**Description**

BACKGROUND

1. Field

The following description relates to a method and apparatus with radar signal processing.

2. Description of Related Art

Advanced driver-assistance systems (ADAS) support driving to improve safety and convenience and to avoid dangerous situations by using sensors mounted inside or outside a vehicle.

Sensors used in an ADAS may include, for example, a camera, an infrared sensor, an ultrasonic sensor, a light detection and ranging (lidar), and a radar. Among these sensors, radar is capable of stably measuring objects in the vicinity of a vehicle without being affected by surrounding environment, such as weather, in particular as compared to optical-based sensors. For a larger detection range, a rather high antenna gain is required. An antenna gain increases with an increasing number of wave radiating elements in an antenna. However, a field of view decreases as a length of wave radiating elements increases. One may arrange the antenna lengthwise along the vehicle, but unfortunately this may result performance degradation due to grating lobe or side lobe increase.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

An object of the invention is to have an antenna concept, corresponding radar signal processing method and apparatus, which obtain a high gain for a larger detection range and which does not, or at least to a much lesser extend, has the drawbacks of the prior art antenna concepts and measuring methods and apparatus.

In one general aspect, a radar signal processing method performed by a radar signal processing apparatus includes determining a first elevation angle with respect to a target object based on a first component of an initial radar signal received through an array antenna of a radar sensor, determining an angular window based on the first elevation angle, generating a second direction of arrival (DOA) estimation spectrum by applying the angular window to a first DOA estimation spectrum generated based on a second component of the initial radar signal, and determining a second elevation angle with respect to the target object based on the second DOA estimation spectrum.

The initial radar signal may be generated based on a virtual array antenna formed from the array antenna.

The virtual array antenna formed from the array antenna may include a first virtual antenna element set arranged on a first line, and a second virtual antenna element set arranged on a second line parallel to the first line.

The array antenna may include a first transmission antenna element set arranged to be aligned on a first line, a second transmission antenna element set arranged on a second line parallel to the first line, a third transmission antenna element set arranged on a third line parallel to each of the first line and the second line, a first reception antenna element set arranged on a fourth line parallel to each of the first line, the second line, and the third line, a second reception antenna element set arranged on a fifth line parallel to each of the first line, the second line, the third line, and the fourth line, and a third reception antenna element set arranged on a sixth line parallel to each of the first line, the second line, the third line, the fourth line, and the fifth line.

The first line, the second line, the third line, the fourth line, the fifth line, and the sixth line are on the same plane.

The first transmission antenna element set may include a first transmission antenna element and a second transmission antenna element, and the first transmission antenna element and the second transmission antenna element may be arranged on the first line and adjacent to each other.

The first reception antenna element set may include a first reception antenna element and a second reception antenna element, and the first reception antenna element and the second reception antenna element may be arranged on the fourth line and are spaced apart from each other.

The initial radar signal may be generated based on a virtual array antenna generated by the array antenna, and the virtual array antenna may include a first virtual antenna element set arranged on a first line, a second virtual antenna element set arranged on a second line parallel to the first line, a third virtual antenna element set arranged on a third line parallel to each of the first line and the second line, a fourth virtual antenna element set arranged on a fourth line parallel to each of the first line, the second line, and the third line, and a fifth virtual antenna element set arranged on a fifth line parallel to each of the first line, the second line, the third line, and the fourth line.

The first component of the initial radar signal may be a component corresponding to at least a portion of the third virtual antenna element set.

The second component of the initial radar signal may be a component corresponding to at least a portion of the first virtual antenna element set.

The determining of the angular window based on the first elevation angle may include determining a first angle and a second angle based on the first elevation angle, a wave number, and spacing between antenna elements, determining a third angle that defines an upper end of the angular window based on the first elevation angle and the first angle, and determining a fourth angle that defines a lower end of the angular window based on the first elevation angle and the second angle.

The radar signal processing method may further include determining the target object based on the initial radar signal, and determining a target azimuth angle of the target object based on the initial radar signal, and in response to the target azimuth angle of the target object being determined, the first elevation angle is determined.

The radar signal processing apparatus may be included in a vehicle.

In another general aspect, a radar signal processing apparatus for processing a radar signal includes: one or more processors; and a memory storing a program that when executed by the one or more processors causes the one or more processors to: determine a first elevation angle with respect to a target object based on a first component of an initial radar signal received through an array antenna of a radar sensor; determine an angular window based on the first elevation angle; generate a second direction of arrival (DOA) estimation spectrum by applying the window to a first DOA estimation spectrum that is generated based on a second component of the initial radar signal; and determine a second elevation angle based on the second DOA estimation spectrum.

The initial radar signal may be generated based on a virtual array antenna formed from the array antenna.

The virtual array antenna generated by the array antenna may include a plurality of first virtual antenna elements arranged on a first line, and a plurality of second virtual antenna elements arranged on a second line parallel to the first line.

In still another general aspect, an array antenna included in a radar sensor includes a first transmission antenna element set arranged on a first line, a second transmission antenna element set arranged on a second line parallel to the first line, a third transmission antenna element set arranged on a third line parallel to each of the first line and the second line, a first reception antenna element set arranged on a fourth line parallel to each of the first line, the second line, and the third line, a second reception antenna element set arranged on a fifth line parallel to each of the first line, the second line, the third line, and the fourth line, and a third reception antenna element set arranged on a sixth line parallel to each of the first line, the second line, the third line, the fourth line, and the fifth line.

The first transmission antenna element set may include a first transmission antenna element and a second transmission antenna element, and the first transmission antenna element and the second transmission antenna element may be arranged on the first line and spaced apart from each other.

The first reception antenna element set may include a first reception antenna element and a second reception antenna element, and the first reception antenna element and the second reception antenna element may be arranged on the fourth line and adjacent each other.

Other features and aspects will be apparent from the following detailed description, the drawings, and the claims.

BRIEF DESCRIPTION OF THE DRAWINGS

FIG. 1 illustrates an example of recognizing a surrounding environment through a radar signal processing method, according to one or more embodiments.

FIG. 2 illustrates an example configuration of a radar signal processing apparatus, according to one or more embodiments.

FIG. 3A illustrates an example of a virtual array antenna formed from transmission antenna elements arranged in a column and reception antenna elements arranged in a column, according to one or more embodiments.

FIG. 3B illustrates an example of a direction of arrival (DOA) estimation spectrum measured by using the virtual array antenna of FIG. 3A, according to one or more embodiments.

FIG. 4A illustrates an example of a virtual array antenna formed from transmission antenna elements arranged in three columns and reception antenna elements arranged in three columns, according to one or more embodiments.

FIG. 4B illustrates an example of a DOA estimation spectrum measured by using the virtual array antenna of FIG. 4A, according to one or more embodiments.

FIG. 5A illustrates an example of transmission antenna elements arranged in three columns and reception antenna elements arranged in three columns, according to one or more embodiments.

FIG. 5B illustrates an example of a virtual array antenna formed from the transmission antenna elements and the reception antenna elements of FIG. 5A, according to one or more embodiments.

FIG. 6A illustrates an example of transmission antenna elements arranged in three columns and reception antenna elements arranged in three columns, according to one or more embodiments.

FIG. 6B illustrates an example of a virtual array antenna formed from the transmission antenna elements and the reception antenna elements of FIG. 6A, according to one or more embodiments.

FIG. 7 illustrates an example of an azimuth angle and elevation angle of an object with respect to a coordinate system based on a radar antenna surface, according to one or more embodiments.

FIG. 8 illustrates an example of determining an elevation angle of a target object based on a radar signal, according to one or more embodiments.

FIG. 9 illustrates an example of a DOA estimation spectrum based on a first component of an initial radar signal generated for a target object by using the virtual array antenna of FIG. 5B or the virtual array antenna of FIG. 6B, according to one or more embodiments.

FIG. 10 illustrates an example of determining an angular window based on a first elevation angle, according to one or more embodiments.

FIG. 11 illustrates an example of a first DOA estimation spectrum based on a second component of an initial radar signal and a second DOA estimation spectrum generated by applying an angular window to the first DOA estimation spectrum, according to one or more embodiments.

FIG. 12 illustrates an example of determining a target azimuth angle of a target object based on an initial radar signal, according to one or more embodiments.

FIG. 13 illustrates an example of a case in which elevation angles are formed for one target object, according to one or more embodiments.

FIG. 14 illustrates an example of a DOA estimation spectrum based on a first component of an initial radar signal generated for a target object that forms multiple elevation angles, according to one or more embodiments.

FIG. 15 illustrates an example of a first DOA estimation spectrum based on a second component of an initial radar signal generated for a single target object that forms multiple elevation angles, and a second DOA estimation spectrum generated by applying an angular window to the first DOA estimation spectrum, according to one or more embodiments.

FIG. 16A illustrates an example of transmission antenna elements arranged in three columns and reception antenna elements arranged in three columns, according to one or more embodiments.

FIG. 16B illustrates an example of a virtual array antenna formed from the transmission antenna elements of FIG. 16A and the reception antenna elements of FIG. 16A, according to one or more embodiments.

FIG. 17A illustrates an example of a DOA estimation spectrum based on a first component of an initial radar signal generated for a target object by using the virtual array antenna of FIG. 16B, according to one or more embodiments.

FIG. 17B illustrates an example of a first DOA estimation spectrum based on a second component of an initial radar signal generated by using the virtual array antenna of FIG. 16B, and a second DOA estimation spectrum generated by applying an angular window to the first DOA estimation spectrum, according to one or more embodiments.

FIG. 18A illustrates an example of a DOA estimation spectrum based on a first component of an initial radar signal generated by using the virtual array antenna of FIG. 16B for a target object that forms a plurality of elevation angles, according to one or more embodiments.

FIG. 18B illustrates an example of a first DOA estimation spectrum based on a second component of an initial radar signal generated by using the virtual array antenna of FIG. 16B for one target object that forms a plurality of elevation angles, and a second DOA estimation spectrum generated by applying an angular window to the first DOA estimation spectrum, according to one or more embodiments.

FIG. 19A illustrates an example of transmission antenna elements arranged in three columns and reception antenna elements arranged in three columns, according to one or more embodiments.

FIG. 19B illustrates an example of a virtual array antenna formed from the transmission antenna elements and the reception antenna elements of FIG. 19A, according to one or more embodiments.

FIG. 20A illustrates an example of a DOA estimation spectrum based on a first component of an initial radar signal generated for a target object by using the virtual array antenna of FIG. 19B, according to one or more embodiments.

FIG. 20B illustrates an example of a first DOA estimation spectrum based on a second component of an initial radar signal generated by using the virtual array antenna of FIG. 19B, and a second DOA estimation spectrum generated by applying an angular window to the first DOA estimation spectrum, according to one or more embodiments.

FIG. 21A illustrates an example of a DOA estimation spectrum based on a first component of an initial radar signal generated by using the virtual array antenna of FIG. 19B for a target object that forms a plurality of elevation angles, according to one or more embodiments.

FIG. 21B illustrates an example of a first DOA estimation spectrum based on a second component of an initial radar signal generated by using the virtual array antenna of FIG. 19B for one target object that forms a plurality of elevation angles, and a second DOA estimation spectrum generated by applying an angular window to the first DOA estimation spectrum, according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

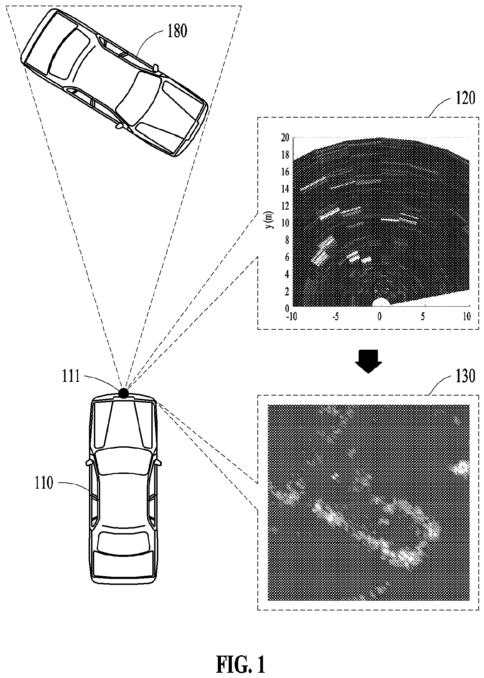

FIG. 1 illustrates an example of recognizing a surrounding environment through a radar signal processing method, according to one or more embodiments.

Referring to FIG. 1, in the case of a front-facing radar, a radar signal processing apparatus 110 may detect information (e.g., a range, velocity, direction, and the like) on an object 180 ahead by analyzing a radar signal received from a radar sensor 111. The radar sensor 111 may be positioned inside or outside the radar signal processing apparatus 110, and the radar signal processing apparatus 110 may detect the information on the object 180 ahead based on both the radar signal received from the radar sensor 111 and data collected by another sensor (e.g., an image sensor, etc.). Resolving power in radar data processing may depend on both hardware resolving power and software resolving power. Hereinafter, improvement of resolving power performance in terms of software is mainly described.

Resolving power refers to the power of a device to discriminate a very small change, for example, smallest unit discriminative power, and it may be expressed as "resolving power = (discriminable smallest scale unit)/(total operation range)" (i.e., resolution/granularity). The smaller the resolving power value of the device, the more precise the results outputted by the device. The resolving power value may also be referred to as the resolving power unit. For example, when the device has a relatively small resolving power value, the device may discriminate a relatively small unit and may output results with relatively high resolution and precision. When the device has a relatively high resolving power value, the device may not discriminate a relatively small unit and thus, output results with reduced resolution and reduced precision. In short, the lower the resolving power value of the device, the finer the resolution of the discriminable information.

The radar signal processing apparatus 110 may be mounted on a vehicle as shown in FIG. 1. The vehicle may perform adaptive cruise control (ACC), automatic emergency braking (AEB), blind spot detection (BSD), lane change assistance (LCA), advance driver assistance, and other similar operations based on the range to the object 180 detected by the radar signal processing apparatus 110. Furthermore, the radar signal processing apparatus 110 may generate a surrounding map 130 in addition to detecting the range ("surrounding" in the sense of a vicinity). The surrounding map 130 is a map representing positions of various objects existing in view of the radar signal processing apparatus 110, such as the object 180. The objects in view of the radar signal processing apparatus 110 may be dynamic objects as vehicles and people, and static objects such as guardrails, road markings, and traffic lights.

To generate the surrounding map 130, a single-scan imaging method may be used. The single-scan imaging method involves the radar signal processing apparatus 110 obtaining a single scan image 120 from the sensor and generating the surrounding map 130 from the obtained single scan image 120. The single scan image 120 is an image generated from the radar signal sensed by a single radar sensor 111, and may represent ranges indicated by radar signals received at a predetermined elevation angle at a relatively high resolving power. For example, in the single scan image 120 shown in FIG. 1, the horizontal line denotes a steering angle of the radar sensor 111, and the vertical line denotes a range from the radar sensor 111 to the object 180. However, the form of a single scan image is not limited to that shown in FIG. 1. The single scan image may have a different format, according to implementation.

The steering angle represents an angle corresponding to a target direction from the radar signal processing apparatus 110 toward the object 180. For example, the steering angle may be an angle between a traveling direction (straight ahead) and a target direction of the radar signal processing apparatus 110 (or a vehicle including the radar signal processing apparatus 110). The steering angle is described herein mainly based on a horizontal angle, but is not limited thereto. For example, the steering angle may also be applied to an elevation angle.

The radar signal processing apparatus 110 may obtain information on a shape of the object 180 through a multi-radar map. The multi-radar map may be generated from a combination of radar scan images ("multi" refers to the scan images, not the radar per se). For example, the radar signal processing apparatus 110 may generate the surrounding map 130 by spatiotemporally combining radar scan images obtained during movement of the radar sensor 111 (and combined based thereon). The surrounding map 130 may be a type of a radar image map and may be used for pilot parking, for example.

The radar signal processing apparatus 110 may use direction of arrival (DOA) information to generate the surrounding map 130. The DOA information refers to information indicating a direction in which a radar signal reflected from an object is received (relative to line of sight of the radar sensor 111). The radar signal processing apparatus 110 may identify the direction in which the object exists with respect to the radar sensor 111 using the DOA information described above. Therefore, such DOA information may be used to generate radar scan data and surrounding maps.

Radar information, such as range, velocity, DOA, and map information, about the object 180 generated by the radar signal processing apparatus 110 may be used to control the vehicle equipped with the radar signal processing apparatus 110. For example, the control of the vehicle may include velocity and steering control of the vehicle, such as ACC, AEB, BSD, and LCA. A control system of the vehicle may control the vehicle by directly or indirectly using the radar information. For example, when a Doppler velocity of an object is measured, the control system may accelerate the vehicle to follow the object or may brake the vehicle to prevent a collision with the object according to its Doppler velocity.

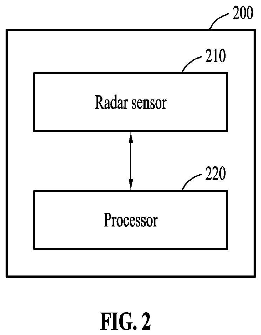

FIG. 2 illustrates an example of a configuration of a radar signal processing apparatus, according to one or more embodiments.

Referring to FIG. 2, a radar signal processing apparatus 200 may include a radar sensor 210 and a processor 220. The radar signal processing apparatus 200 may be an electronic device. The radar sensor 210 may radiate a radar signal to the outside of the radar sensor 210 and may receive a reflected signal, that is, the radiated radar signal as reflected by an object. The radiated radar signal may be referred to as a radar transmission signal, and the received signal may be referred to as a radar reception signal. The radar transmission signal may include a chirp signal with a carrier frequency modulated based on a frequency modulation model. The frequency of the radar transmission signal may change within a predetermined band. For example, the frequency of the radar transmission signal may linearly change within a predetermined band.

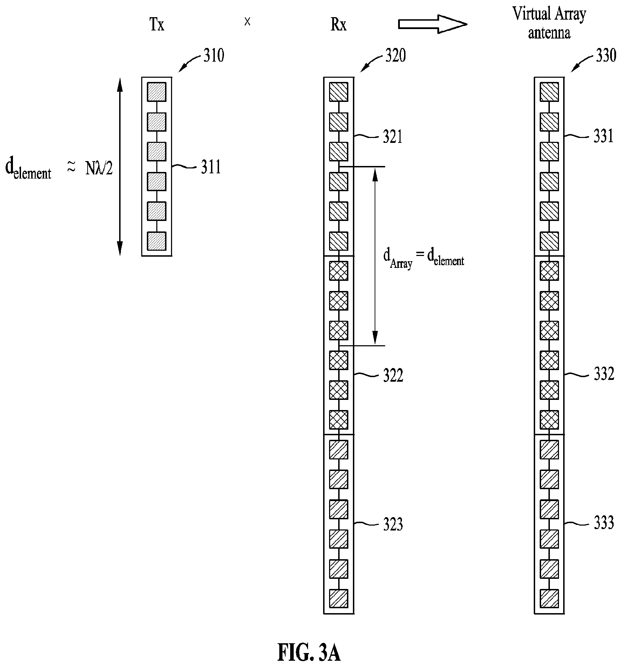

The radar sensor 210 may include an array antenna and may transmit a radar transmission signal and receive a radar reception signal through the array antenna. The array antenna may include antenna elements (each being a discrete antenna). Multiple input multiple output (MIMO) may be implemented through the antenna elements. In this case, MIMO channels may be formed from the antenna elements. For example, channels corresponding to $M \times N$ virtual antennas may be formed through M transmission antenna elements and N reception antenna elements. Here, radar reception signals received through the channels may have different phases according to their respective reception directions. The M x N virtual antennas may configure a virtual array antenna. Examples of the virtual array antenna are described in detail below with reference to FIGS. 3A, 4A, 5B, and 6B.

Radar data may be generated based on the radar transmission signal and the radar reception signal. For example, the radar sensor 210 may transmit the radar transmission signal through the array antenna based on the frequency modulation model, receive the radar reception signal through the array antenna when the radar transmission signal is reflected by the object, and generate an intermediate frequency (IF) signal based on the radar transmission signal and the radar reception signal. The IF signal may have a frequency corresponding to a difference between the frequency of the radar transmission signal and the frequency of the radar reception signal. The processor 220 may perform a sampling operation on the IF signal, and generate radar data through a result of the sampling. The radar data may correspond to raw data with an IF.

The processor 220 may generate and use information on the object based on the radar data. For example, the processor 220 may perform range fast Fourier transform (FFT), Doppler FFT, constant false alarm rate (CFAR) detection, DOA estimation, and the like based on the radar data, and thereby obtain the information on the object, such as range, velocity, and direction. Such information on the object may be provided for various applications such as AAC, AEB, BSD, and LCA.

Frequencies of radar signals for a vehicle used for autonomous driving may be within a predetermined band (e.g., 76 to 81 gigahertz (GHz)), and a radar sensor (e.g., the radar sensor 210 of FIG. 2) may be manufactured to have a size to efficiently use the frequencies and to be mounted on a vehicle. A basic rule for the size of an antenna (e.g., an array), for efficiently radiating a radar transmission signal, is that the size may be a multiple of a half-wave length unit for a wavelength (e.g., a wavelength of a signal in a 76 to 81 GHz frequency band is approximately 3.8 millimeters (mm)) of the radar transmission signal, and the antenna may be implemented on a printed circuit board (PCB) to be mounted on the vehicle (the multiple may be the number of radiating elements in the array).

While various types of antennas are implementable on a PCB, a patch or monopole type antenna is generally used because the gain of such an antenna, which affects a maximum detection range of radar, and the beam width of such antenna (which affects a field of view (FoV) of radar) are in a trade-off relationship (gain and FOV are generally balanced).

With this in mind, a patch type antenna may be used as a single radiating element, that is, a patch type antenna may be mainly used as the atomic antenna unit for the vehicle to satisfy a detection range of a mid-range radar (MRR) or a long-range radar (LRR). Multiple patch type antennas (radiating elements) may form a subarray, i.e., one antenna element (e.g., a strip of radiating elements). For both transmission antennae and reception antennae, the performance of a radar sensor may vary depending on an arrangement of one or more such antenna elements, each configured in the form of a subarray.

As used herein, "horizontal" and "vertical" are used in the usual sense, with the assumption that the various radar sensors/antennae are formed in/on a planar structure with the planar structure (e.g., a substrate or circuit board) oriented such that a normal of the planar structure (sensor), i.e., the direction of sensing, is mostly horizontal and the planar structure is generally vertical. The planar structure may be a structure on which radiating elements are arranged (e.g., a printed circuit board). In some examples there may be one planar structure for a transmitter and another planar structure for a receiver. In some examples, transmitting and receiving radiating elements may be on the same planar structure. In addition, the term "azimuth angle" refers to an angle/arc sweeping through a horizontal plane (a "left-right" angle), and "elevation angle" refers to an angle/arc that sweeps through a vertical plane (an "up-down" angle). As noted, "horizontal" and "vertical" are meaningful in vehicle applications, however, the examples and embodiments described herein are not limited to any particular sensor orientation with respect to the physical horizon (ground plane).

Antenna gain may increase as the number of radiating elements in the antenna elements (which are in a subarray form) increases. As the total length of a line of radiating elements arranged along the line increases, an FoV with respect to the line may decrease (narrow). For example, when radiating elements are arranged in a line corresponding to an azimuth angle (i.e., a horizontal line of radiating elements), as the length of the line increases, an FoV with respect to the azimuth may narrow. As the total length of a line radiating elements are arranged in a line corresponding to an elevation angle (i.e., a vertical line of radiating elements) increases, an FoV with respect to the elevation angle may narrow.

Generally, in the radar sensor for the vehicle, the radiating elements may be arranged in a line corresponding to the elevation angle (vertical) to secure the FoV with respect to the azimuth, which, is relatively more important than the FoV with respect to the elevation angle. Because the radiating elements are arranged lengthwise along the line corresponding to the elevation angle for the sake of the antenna gain in the antenna elements of the radar sensor, the arrangement of antenna elements themselves may be considered for improving measuring of the elevation angle.

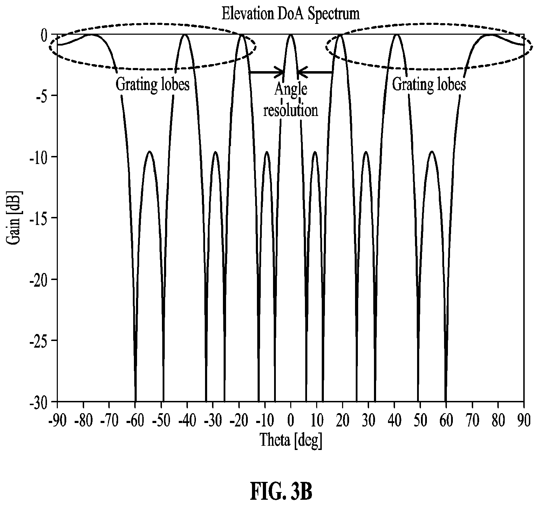

For example, consider a virtual array antenna, which is formed from transmission antenna elements (an antenna element may be a vertical strip of patches) that are themselves arranged in a column, and reception antenna elements that are also arranged in a column (relative to the horizon). In such a virtual array antenna, an undesirable grating lobe (GL) may be generated due to the span of the antenna elements, which is increased by the length of the respective antenna elements, and, an undesirable sidelobe level (SLL) may increase. The virtual array antenna described above and a DOA estimation spectrum on the virtual array antenna are described with reference to FIGS. 3A and 3B.

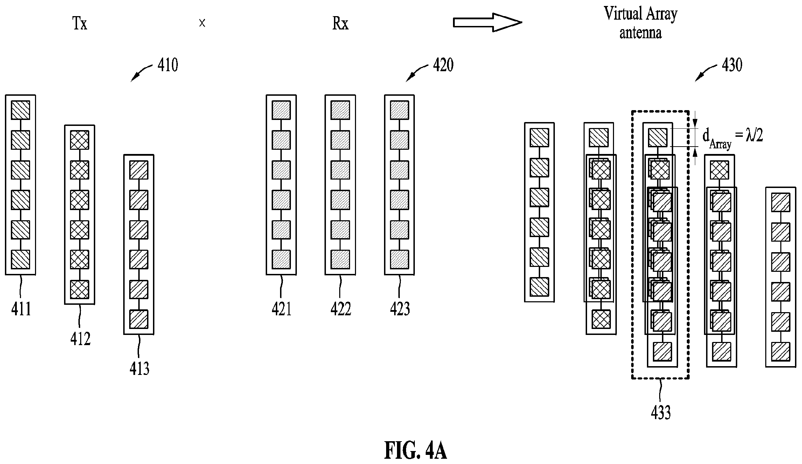

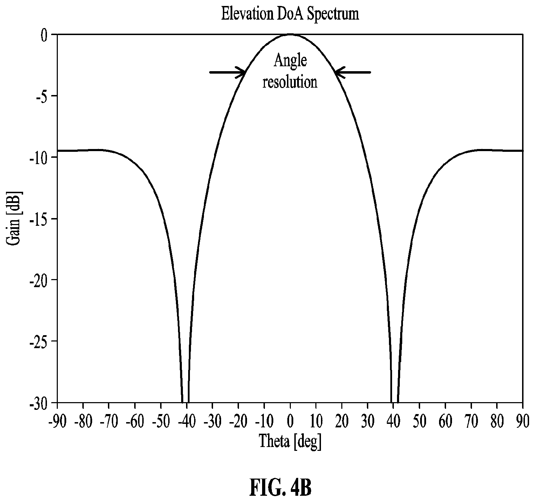

For example, consider a virtual array antenna formed from (i) transmission antenna elements arranged as three respective columns (left side of FIG. 4A) and (ii) reception antenna elements arranged in three respective columns (middle of FIG. 4A). When these antenna elements are arranged (e.g., virtually) in five columns (which are arranged along a line of the elevation angle, i.e., horizontally), DOA estimation on the elevation angle may be performed by using a virtual array formed of the antenna elements in the middle of the five columns. However, with this approach a resolution/fineness of the estimated DOA may be low. The virtual array antenna described above and a DOA estimation spectrum on the virtual array antenna is described with reference to FIGS. 4A and 4B.

FIG. 3A illustrates an example of a virtual array antenna formed from transmission antenna elements arranged in a column and reception antenna elements arranged in a column, according to one or more embodiments.

According to an example, a transmission antenna 310 may include a first transmission antenna element 311. A reception antenna 320 may include a first reception antenna element 321, a second reception antenna element 322, and a third reception antenna element 323. A length $d_{element}$ of an antenna element may be $N\lambda/2$. N is the number of radiating elements (e.g., six), and $\lambda$ is a transmission wavelength. A respective distance $d_{Array}$ between the first, second, and third reception antenna elements 321, 322, and 323 may be greater than or equal to the length $d_{element}$ of the antenna element. For example, the distance $d_{Array}$ between the first reception antenna elements 321 and the second reception antenna elements 322 may be defined as a distance between a center of the first reception antenna elements 321 and a center of the second reception antenna elements 322.

The transmission antenna 310 and the reception antenna 320 may form a virtual array antenna 330. The virtual array antenna 330 may include virtual antenna elements 331, 332, and 333.

FIG. 3B illustrates an example of a direction of arrival (DOA) estimation spectrum measured by using the virtual array antenna of FIG. 3A, according to one or more embodiments. That is, FIG. 3B shows gain as a function of elevation angle.

When the virtual array antenna 330 illustrated in FIG. 3A is arranged in a column along a line of an elevation angle (i.e., vertical column of radiating elements), a GL may be generated due to arrangement spacing among the virtual antenna elements 331, 332, and 333 that is increased by the length of the respective virtual antenna elements 331, 332, and 333. For the same reason, an SLL may increase. Although an object might be positioned at an elevation angle of 0 (level with the radar), due to the GL, an accurate elevation angle of the object might not be measured from a DOA estimation spectrum measured by the virtual array antenna 330.

FIG. 4A illustrates an example of a virtual array antenna formed from transmission antenna elements arranged in three columns and reception antenna elements arranged in three columns, according to one or more embodiments.

According to an example, a transmission antenna 410 may include a first transmission antenna element 411 with radiating elements arranged on a first line (vertical), a second transmission antenna element 412 with radiating elements arranged on a second line (vertical), and a third transmission antenna element 413 with radiating elements arranged on a third line (vertical). A reception antenna 420 may include a first reception antenna element 421 with radiating elements arranged on a fourth line (vertical), a second reception antenna element 422 with radiating elements arranged on a fifth line (vertical), and a third reception antenna element 423 with radiating elements arranged on a sixth line (vertical). The first, second, third, fourth, fifth, and sixth lines may correspond to elevation angle (vertical) and may be parallel to one another.

The transmission antenna 410 and the reception antenna 420 may form a virtual array antenna 430. The virtual array antenna 430 may include virtual antenna elements. A radar signal received by virtual antenna elements 433 in the middle column of the virtual antenna elements of the virtual array antenna 430 may be used to measure the elevation angle.

FIG. 4B illustrates an example of a DOA estimation spectrum measured by using the virtual array antenna of FIG. 4A, according to one or more embodiments.

When the virtual array antenna 430 illustrated in FIG. 4A is arranged horizontally (with respect to each other) with relatively short columns, a resolution of the elevation angle to be measured may be low (the elevation angle measured according to a DOA estimation spectrum measured by the virtual antenna elements 433 formed in the middle column).

When the shape/layout of an individual antenna element for an MRR and/or LRR for a vehicle is columnar (extend in a direction of the line of the elevation angle, i.e., vertical), a method of arranging the antenna elements to improve the performance of measuring the elevation angle (which is sacrificed due to the short columnar shape of the antenna elements) may be considered. A method of measuring the elevation angle using such an arrangement of the antenna elements may also be considered.

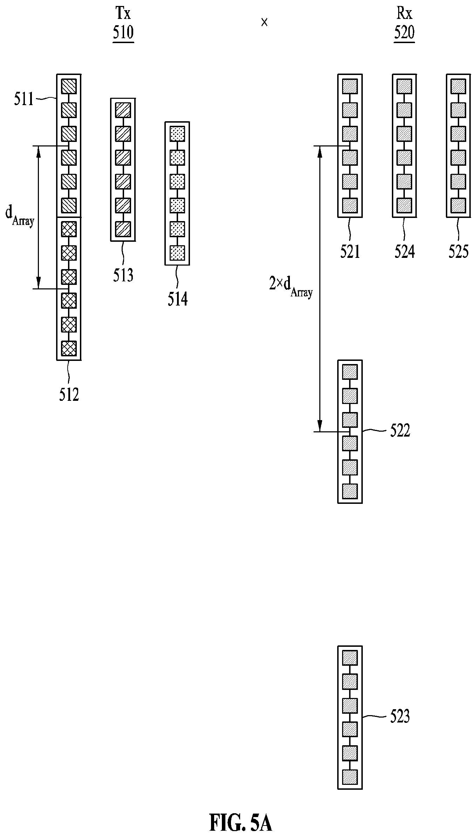

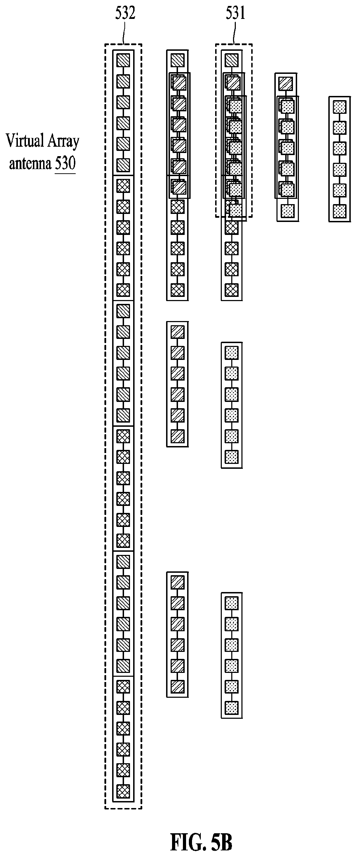

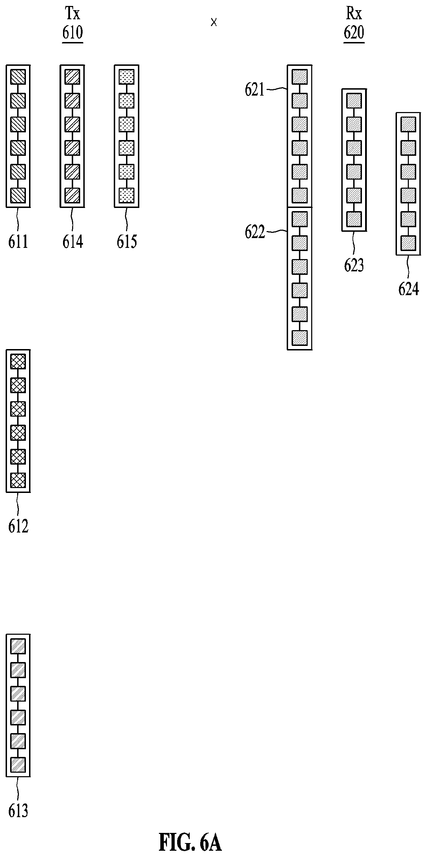

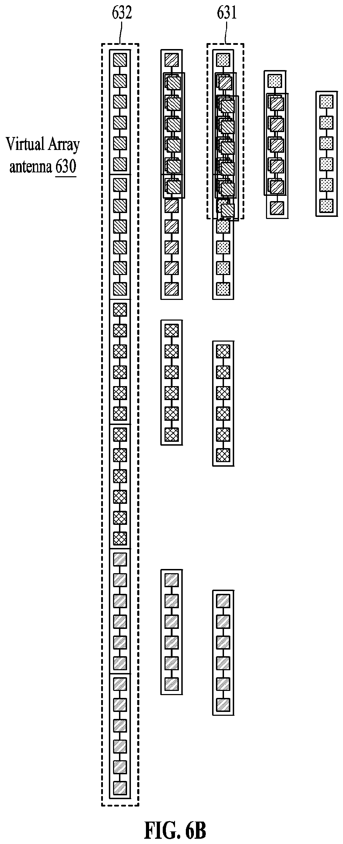

According to an example, a method of forming the arrangement of the antenna elements to improve the performance of measuring the elevation angle, and a virtual array antenna formed based on the arrangement of the antenna elements, are described with reference to FIGS. 5A, 5B, 6A, and 6B.

FIG. 5A illustrates an example of transmission antenna elements arranged in three columns and reception antenna elements arranged in three columns, according to one or more embodiments.

According to an example, a transmission antenna 510 may include a first transmission antenna element set (a column of transmission antenna elements) arranged on a first line (vertical). The transmission antenna 510 may also include a second transmission antenna element set arranged on a second line parallel to the first line. The transmission antenna 510 may include a third transmission antenna element set arranged on a third line parallel to the first and second lines. The first, second, and third lines may correspond to an elevation angle and may be parallel to one another. The first transmission antenna element set may include a first transmission antenna element 511 and a second transmission antenna element 512. The second transmission antenna element set may include a third transmission antenna element 513. The third transmission antenna element set may include a fourth transmission antenna element 514. A length $d_{element}$ of an antenna element may be $N\lambda/2$. In this example N is the number (e.g., 6) of radiating elements in the antenna element, and $\lambda$ is a wavelength of a radar transmission signal. A respective distance $d_{Aarray}$ between the first and second transmission antenna elements 511, 512 may be greater than or equal to the length $d_{element}$ of an antenna element.

According to an example, the third transmission antenna element 513 may be arranged side by side with at least a portion of the first transmission antenna element 511 and at least a portion of the second transmission antenna element 512 (i.e., may horizontally aligned with both). For example, the elevation of the topmost radiating element of the third transmission antenna element 513 may be at the elevation of the second topmost radiating element of the first transmission antenna element 511, and the elevation of the lowermost radiating element of the third transmission antenna element 513 may be at the elevation of the uppermost radiating element of the second transmission antenna element 512. Put another way, the third transmission antenna may be offset downward from the top of the first transmission antenna element set by about the space of one radiating element.

the fourth transmission antenna element 514 may be arranged on the third line such that it partly aligns with (horizontally) at least a portion of the first transmission antenna element 511 and so that it partly aligns with (horizontally) at least a portion of the second transmission antenna element 512. For example, the elevation of the uppermost radiating element of the fourth transmission antenna element 514 may horizontally align with the third radiating element (from the top) of the first transmission antenna element 511, and the elevation of the lowermost radiating element of the fourth transmission antenna element 514 may horizontally align with the second wave radiating element (from the top) of the second transmission antenna element 512.

According to an example, a reception antenna 520 may include a first reception antenna element set (a column of transmission antenna elements) on a fourth line parallel to the first, second, and third lines (vertical). The reception antenna 520 may also include a second transmission antenna element set aligned on a fifth line parallel to each of the first, second, third, and fourth lines. The reception antenna 520 may include a third reception antenna element set on a sixth line parallel to each of the first, second, third, fourth, and fifth lines. The fourth, fifth, and sixth lines correspond to an elevation angle and may be parallel to one another. For example, the first reception antenna element set may include a first reception antenna element 521, a second reception antenna element 522, and a third reception antenna element 523. For example, the second reception antenna element set may include a fourth reception antenna element 524. For example, the third reception antenna element set may include a fifth reception antenna element 525.

A distance $d_{Array}$ of the first reception antenna element 521 and the second reception antenna element 522 may be two times or more than the length $d_{element}$ of the antenna element. Similarly, a distance $d_{Array}$ of the second reception antenna element 522 and the third reception antenna element 523 may also be two times or more than the length $d_{element}$ of the antenna element.

According to an example, the first reception antenna element 521 arranged on the fourth line, the fourth reception antenna element 524 arranged on the fifth line, and the fifth reception antenna element 525 arranged on the sixth line may be arranged side by side with each other (e.g., horizontally aligned). In other words, the uppermost radiating elements may be at the same elevation.

The number of transmission antenna elements included in the transmission antenna 510, the number of radiating elements in an antenna element, and/or the number of reception antenna elements included in the reception antenna 520 may vary depending on implementations.

Referring to FIG. 5A, the number of radiating elements included in each of the transmission antenna elements of the transmission antenna 510 is six, however, the number of radiating elements is not limited to the illustrated example. For example, the number of radio radiating elements included in the transmission antenna element may be four or eight.

Referring to FIG. 5A, the number of radiating elements included in each of the reception antenna elements of the reception antenna 520 is six, however, the number of radiating elements is not limited to the illustrated example. For example, the number of radio radiating elements included in the reception antenna element may be four or eight.

FIG. 5B illustrates an example of a virtual array antenna formed from the transmission antenna elements and the reception antenna elements of FIG. 5A.

The transmission antenna 510 and the reception antenna 520 may form a virtual array antenna 530. The virtual array antenna 530 may include virtual antenna elements. The virtual array antenna 530 may include the virtual antenna elements arranged in five columns, with the transmission antenna 510 arranged to have three columns and the reception antenna 520 arranged to have three columns.

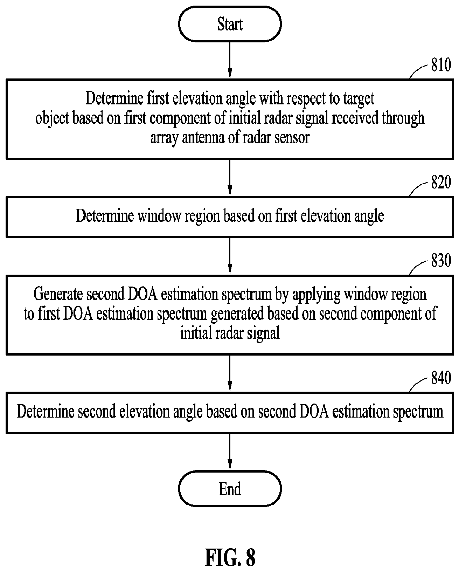

A radar signal received by the virtual antenna elements (as arranged in five columns) may be used to measure the elevation angle. Specifically, a low-resolution DOA estimation spectrum (for determining an elevation angle with respect to an object) may be generated based on a first component of a radar signal corresponding to a first virtual antenna element set 531 (which includes at least a portion of the virtual antenna elements) arranged on the third line of the virtual array antenna 530. A high-resolution DOA estimation spectrum (for determining an elevation angle with respect to an object) may be generated based on a second component of the radar signal corresponding to a second virtual antenna element set 532 (which includes the virtual antenna elements, arranged on the first line, of the virtual array antenna 530). The elevation angle with respect to the object may be determined based on the low-resolution DOA estimation spectrum and the high-resolution DOA estimation spectrum. A method of using this information to determine the elevation angle with respect to the object is described with reference to FIGS. 8 to 12.

FIG. 6A illustrates an example of transmission antenna elements arranged in three columns and reception antenna elements arranged in three columns, according to one or more embodiments.

According to an example, a transmission antenna 610 may include a first transmission antenna element set arranged on a first line. The transmission antenna 610 may include a second transmission antenna element set arranged to be aligned on a second line parallel to the first line. The transmission antenna 610 may include a third transmission antenna element set arranged to be aligned on a third line parallel to each of the first and second lines. The first, second, and third lines may be an line of an elevation angle and may be parallel to one another. For example, the first transmission antenna element set may include a first transmission antenna element 611, a second transmission antenna element 612, and a third transmission antenna element 613. For example, the second transmission antenna element set may include a fourth transmission antenna element 614. For example, the third transmission antenna element set may include a fifth transmission antenna element 615.

A distance $d_{Array}$ between the first transmission antenna element 611 and the second transmission antenna element 612 may be two times or more than the antenna element length $d_{element}$. A distance $d_{Array}$ between the second transmission antenna element 612 and the third transmission antenna element 613 may be two times or more than the antenna element length $d_{element}$.

According to an example, the first transmission antenna element 611 arranged on the first line, the fourth transmission antenna element 614 arranged on the second line, and the fifth transmission antenna element 615 arranged on the third line may be arranged side by side with each other. For example, the first transmission antenna element 611, the fourth transmission antenna element 614, and the fifth transmission antenna element 615 may be arranged to have the same elevation.

According to an example, a reception antenna 620 may include a first transmission antenna element set arranged to be aligned on a fourth line parallel to the first, second, and third lines. The reception antenna 620 may include a second reception antenna element set arranged to be aligned on a fifth line parallel to each of the first, second, third, and fourth lines. The reception antenna 620 may include a third transmission antenna element set arranged to be aligned on a sixth line parallel to each of the first, second, third, fourth, and fifth lines. The fourth, fifth, and sixth lines may be an line of an elevation angle and may be parallel to one another. The first reception antenna element set may include a first reception antenna element 621 and a second reception antenna element 622. The second reception antenna element set may include a third reception antenna element 623. The third reception antenna element set may include a fourth reception antenna element 624. A length $d_{element}$ of an antenna element may be $N\lambda/2$. N may be the number (e.g., 6) of radiating elements, and $\lambda$ may be the wavelength of a radar transmission signal. A respective distance $d_{Array}$ between the first reception antenna element 621 and the second reception antenna element 622 may be greater than or equal to the length $d_{element}$ of an antenna element.

According to an example, the third reception antenna element 623 arranged on the fifth line may be arranged side by side with at least a portion of the first reception antenna element 621 and at least a portion of the second reception antenna element 622 arranged on the fourth line. For example, the elevation of the uppermost radiating element of the third reception antenna element 623 may have the same elevation as the second (from the top) radiating element of the first reception antenna element 621. The elevation of the lowermost radiating element of the third reception antenna element 623 may have the same elevation as the second (from the top) radiating element of the second reception antenna element 622.

The fourth reception antenna element 624 arranged on the sixth line may be arranged side by side with, and horizontally align with at least a portion of the first reception antenna element 621 and at least a portion of the second reception antenna element 622 arranged on the fourth line. For example, the elevation of the uppermost radiating element of the fourth reception antenna element 624 may be at the elevation of the third (from the top) radiating element of the first reception antenna element 621, and the elevation of the lowermost radiating element may be at the elevation of the second (from the top) radiating element of the second reception antenna element 622.

The first reception antenna element 621 may be arranged so that the elevation of the topmost radiating element of the first reception antenna element 621 corresponds to the elevation of the topmost radiating element of the first transmission antenna element 611.

The number of transmission antenna elements included in the transmission antenna 610 and/or the number of reception antenna elements included in the reception antenna 620 may vary depending on implementations.

Referring to FIG. 6A, the number of radiating elements included in each of the transmission antenna elements of the transmission antenna 610 is six, however, the number of radiating elements is not limited to the illustrated example. For example, the number of radio radiating elements may be four or eight.

Referring to FIG. 6A, the number of radiating elements included in each of the reception antenna elements of the reception antenna 620 is six, however, the number of radiating elements is not limited to the illustrated example. For example, the number of radiating elements included in the reception antenna element may be four or eight.

FIG. 6B illustrates an example of a virtual array antenna formed from the transmission antenna elements of FIG. 6A and the reception antenna elements of FIG. 6A.

The transmission antenna 610 and the reception antenna 620 may form a virtual array antenna 630. The virtual array antenna 630 may include virtual antenna elements. The virtual antenna elements may be arranged in five columns, with the transmission antenna 610 arranged to have three columns and the reception antenna 620 arranged to have three columns.

According to an example, the virtual array antenna 630 may be comparable or identical to the virtual array antenna 530 described above with reference to FIG. 5B.

A radar signal received by the virtual antenna elements arranged in five columns may be used to measure the elevation angle. For example, a low-resolution DOA estimation spectrum (for determining an elevation angle with respect to an object) may be generated based on a first component of a radar signal, the first component corresponding to (received by) a first virtual antenna element set 631, the first virtual antenna element set including at least a portion of the virtual antenna elements, and arranged on the third line of the virtual array antenna 630. For example, a high-resolution DOA estimation spectrum (for determining an elevation angle with respect to an object) may be generated based on a second component of a radar signal, the second component corresponding to a second virtual antenna element set 632, which includes the virtual antenna elements of the virtual array antenna 630 that are arranged on the first line. The elevation angle with respect to the object may be determined based on the low-resolution DOA estimation spectrum and the high-resolution DOA estimation spectrum. A method of determining the elevation angle using the high and low resolution spectrums is described with reference to FIGS. 8 to 12.

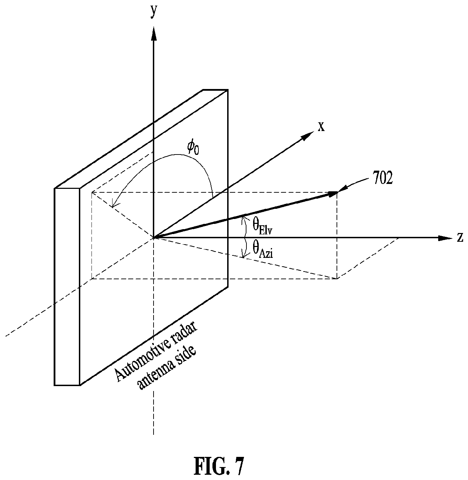

FIG. 7 illustrates an example of an azimuth angle and elevation angle of an object with respect to a coordinate system based on a radar antenna surface, according to one or more embodiments. For discussion, any of the virtual antennae discussed above may be mounted on (or may be) the "automotive radar antenna side" and may be facing (have a normal) in the Z direction.

A radar antenna surface (e.g., the rectangular shape in FIG. 7) may be defined based on a position of a radar sensor that includes an array antenna. Based on the radar antenna surface, an line of the azimuth angle may be defined as an x line, an line of the elevation angle may be defined as a y line, and an line of a distance may be defined as a z line.

For example, when the object is at specific coordinates 702, $\theta_{Azi}$ is the azimuth angle of the object, and $\theta_{Elv}$ is the elevation angle of the object, $\varphi_0$ is defined based on $G_{Azi}$ and $\theta_{Elv}$.

FIG. 8 illustrates an example of determining an elevation angle of a target object based on a radar signal, according to one or more embodiments.

Operations 810 to 840 described below may be performed by a radar signal processing apparatus (e.g., the radar signal processing apparatus 200 of FIG. 2).

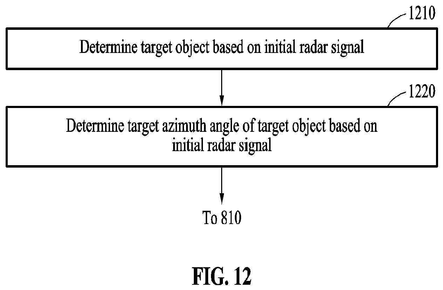

According to an example, before operation 810 is performed, the radar signal processing apparatus may initially identify one or more objects based on an initial radar signal, and determine, as a target object, a specific object (among the one or more identified objects) for determining an elevation angle thereof. A method of determining a target object is described with reference to FIG. 12.

In operation 810, the radar signal processing apparatus may determine a first elevation angle with respect to a target object based on a first component of an initial radar signal received through an array antenna of a radar sensor (e.g., the radar sensor 210 of FIG. 2). The initial radar signal may be generated based on a virtual array antenna formed from the array antenna.

According to an example, the virtual array antenna (e.g., the virtual array antenna 530 of FIG. 5 or the virtual array antenna 630 of FIG. 6) formed from the array antenna may include virtual antenna elements arranged to be aligned on each of first to fifth lines. For example, the first component of the initial radar signal may be a component corresponding to the first virtual antenna element set 531/631 of the virtual array antenna 530/630. The first component of the initial radar signal may be a signal obtained by the first virtual antenna element set 531/631 of the virtual array antenna 530/630.

According to an example, based on the first component of the initial radar signal, the radar signal processing apparatus may generate a low-resolution DOA estimation spectrum for determining the elevation angle. For example, in the low-resolution DOA estimation spectrum, a main lobe may be generated and a GL may be not-generated (or minimized). The radar signal processing apparatus may determine a first elevation angle with respect to the target object based on the main lobe. For example, an angle corresponding to a peak of the main lobe may be determined as the first elevation angle.

In operation 820, the radar signal processing apparatus may determine a window region (angular window) based on the first elevation angle. For example, the angular window may be a region for eliminating a GL generated in a high-resolution DOA estimation spectrum (such spectrum generated based on a second component of the initial radar signal). Hereinafter, the high-resolution DOA estimation spectrum (generated based on the second component of the initial radar signal) may be referred to as a first DOA estimation spectrum. For example, the second component of the initial radar signal may be a component corresponding to the second virtual antenna element set 532/632 of the virtual array antenna 530/630. The second component of the initial radar signal may be a signal obtained by the second virtual antenna element set 532/632 of the virtual array antenna 530/630.

Equation 1

$$\mathrm{AF}(\theta, \phi) = \sum_{n=1}^{N} e^{jk(x_n \sin\theta \cos\phi + y_n \sin\theta \sin\phi)} \beta, \quad \beta = e^{-jk(x_n \sin\theta_0 \cos\phi_0 + y_n \sin\theta_0 \sin\phi_0)}$$

Equation 1 represents an array factor indicating a feature of a signal received by the virtual array antenna. In Equation 1, N denotes the number of virtual antenna elements, k denotes a wave number, $x_n$ denotes spatial coordinates on an line of an azimuth angle in the radar sensor of each virtual antenna element, and $y_n$ denotes spatial coordinates on an line of an elevation angle in the radar sensor of each virtual antenna element. $\theta_0$ and $\varphi_0$ respectively denote angles at which a signal reflected from the target object is received by the radar sensor. Because the distance between the antenna elements in the radar sensor is sufficiently less than a long-range between the target object and the radar sensor, $\theta_0$ and $\varphi_0$ may be the same with respect to all the antenna elements.

Using Equation 1, the first DOA estimation spectrum may be represented by Equation 2.

### Equation 2

$$\text{Spectrum}_{Elv}(\theta) = \sum_{n=1}^{N} e^{jky_n(\sin\theta - \sin\theta_0)}$$

In the first DOA estimation spectrum, positions of GLs closest to the main lobe may be represented by Equation 3 below.

### Equation 3

$$\theta_{G,upper} = \sin^{-1}\left(\sin\theta_0 + \frac{2\pi}{kd}\right), \quad for \quad -\frac{\pi}{2} \le \theta_0 \le \sin^{-1}\left(1 - \frac{2\pi}{kd}\right)$$

$$\theta_{G,lower} = \sin^{-1}\left(\sin\theta_0 - \frac{2\pi}{kd}\right), \quad for \quad \sin^{-1}\left(-1 + \frac{2\pi}{kd}\right) \le \theta_0 \le \frac{\pi}{2}$$

In Equation 3, k denotes a wave number, d denotes spacing or a distance between the virtual antenna elements, $\theta_{G,upper}$ denotes a position of a GL close to a right side of the main lobe, and $\theta_{G,lower}$ denotes a position of a GL close to a left side of the main lobe. Hereinafter, $\theta_{G,upper}$ may be referred to as a first angle and $\theta_{G,lower}$ may be referred to as a second angle.

According to an example, the radar signal processing apparatus may determine a third angle that defines an upper end of the angular window based on the first elevation angle and the first angle. The third angle may be determined by Equation 4.

### Equation 4

$$\text{Third angle} = \frac{1}{2}\left(\theta_{0,LR} + \theta_{G,upper}\right)$$

In Equation 4, $\theta_{0,LR}$ denotes the first elevation angle.

According to an example, the radar signal processing apparatus may determine a fourth angle that defines a lower end of the angular window region based on the first elevation angle and the second angle. The fourth angle may be determined by Equation 5.

### Equation 5

$$\text{Fourth angle} = \frac{1}{2}\left(\theta_{0,LR} + \theta_{G,lower}\right)$$

According to an example, the radar signal processing apparatus may define the angular window by Equation 6 based on the third angle and the fourth angle.

### Equation 6

$$\text{Window}(\theta) = \begin{cases} 1, \quad for \quad \frac{1}{2}\left(\theta_{0,LR} + \theta_{G,lower}\right) \le \theta \le \frac{1}{2}\left(\theta_{0,LR} + \theta_{G,upper}\right) \\ \quad\quad\quad 0, \quad for \quad elsewhere \end{cases}$$

In operation 830, the radar signal processing apparatus may generate a second DOA estimation spectrum by applying the angular window to the first DOA estimation spectrum (which has been generated based on the second component of the initial radar signal). For example, the second DOA estimation spectrum may be defined by Equation 7.

Equation 7

$$\text{Spectrum}_{Elv,final}(\theta) = \text{Spectrum}_{Elv}(\theta) \times \text{Window}(\theta)$$

In operation 840, the radar signal processing apparatus may determine a second elevation angle based on the second DOA estimation spectrum. For example, the radar signal processing apparatus may determine, as the second elevation angle, an angle corresponding to a peak of a main lobe generated within the second DOA estimation spectrum.

According to an example, when the number of main lobes generated within a DOA estimation spectrum is more than one, angles respectively corresponding to peaks of the main lobes may be determined as second elevation angles.

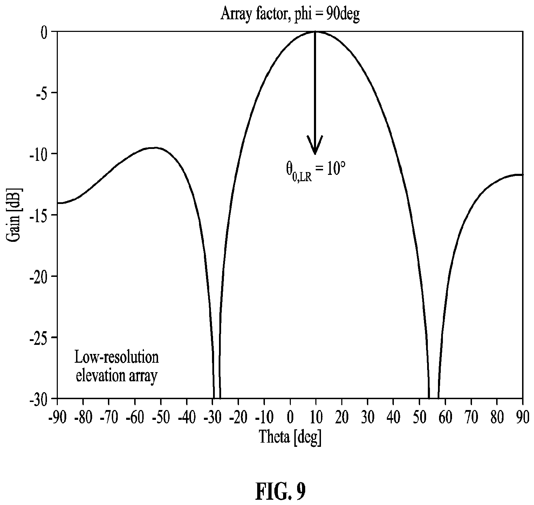

FIG. 9 illustrates an example of a DOA estimation spectrum based on a first component of an initial radar signal generated for a target object by using the virtual array antenna of FIG. 5B or the virtual array antenna of FIG. 6B, according to one or more embodiments.

According to an example, a radar signal processing apparatus (e.g., the radar signal processing apparatus 200 of FIG. 2) may generate a DOA estimation spectrum based on the first component of the initial radar signal generated by using the virtual array antenna 530 of FIG. 5B (or the virtual array antenna 630 of FIG. 6B). For example, the first component of the initial radar signal may be obtained by the first virtual antenna element set 531 (or the first virtual antenna element set 631 of FIG. 6B) of the virtual array antenna 530 (or the virtual array antenna 630).

According to the illustrated DOA estimation spectrum, a peak of a main lobe generated in the DOA estimation spectrum may correspond to 10°. The first elevation angle $\theta_{0,LR}$ may be determined as 10°.

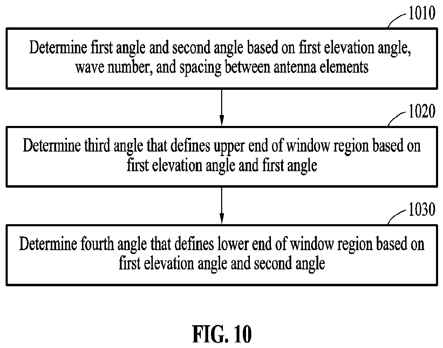

FIG. 10 illustrates an example of determining an angular window based on a first elevation angle, according to one or more embodiments.

Operations 1010 to 1030 may relate to operation 820 described above with reference to FIG. 8. For example, operation 820 may include operations 1010 to 1030. Operations 1010 to 1030 may be performed by a radar signal processing apparatus (e.g., the radar signal processing apparatus 200 of FIG. 2).

In operation 1010, the radar signal processing apparatus may determine a first angle and a second angle based on a first elevation angle, a wave number, and spacing between antenna elements. The first angle and the second angle may be respectively $\theta_{G,upper}$ and $\theta_{G,lower}$ described above with reference to Equation 3.

In operation 1020, the radar signal processing apparatus may determine a third angle that defines an upper end of the angular window based on the first elevation angle and the first angle. For example, the third angle may be determined using Equation 4 described above.

In operation 1030, the radar signal processing apparatus may determine a fourth angle that defines a lower end of the angular window based on the first elevation angle and the second angle. For example, the fourth angle may be determined using Equation 5 described above.

According to an example, the angular window may be determined as a region between the third angle and the fourth angle. For example, the angular window may be defined by Equation 6 described above.

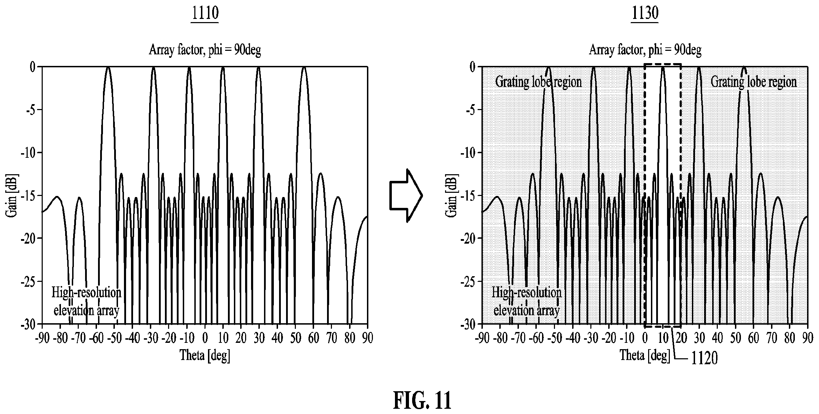

FIG. 11 illustrates an example of a first DOA estimation spectrum based on a second component of an initial radar signal and a second DOA estimation spectrum generated by applying a angular window to the first DOA estimation spectrum, according to one or more embodiments.

According to an example, a radar signal processing apparatus (e.g., the radar signal processing apparatus 200 of FIG. 2) may generate a first DOA estimation spectrum 1110 based on a second component of an initial radar signal. For example, the second component of the initial radar signal may be obtained by the second virtual antenna element set 532 (or the second virtual antenna element set 632) of the virtual array antenna 530 (or the virtual array antenna 630). A plurality of GLs may be generated within the first DOA estimation spectrum 1110.

According to an example, the radar signal processing apparatus may generate a second DOA estimation spectrum 1130 by applying a angular window 1120 to the first DOA estimation spectrum 1110. For example, the angular window 1120 may be determined as a region between 20° to 0°. A value (e.g., a gain value) of a remaining region of the second DOA estimation spectrum 1130 (a region other than the angular window 1120) may be 0. For example, a value of a region exceeding 20° and a region less than 0° of the second DOA estimation spectrum 1130 may be 0.

The radar signal processing apparatus may determine a second elevation angle based on the second DOA estimation spectrum 1130. For example, an angle, 10°, that corresponds to a peak of a main lobe of the second DOA estimation spectrum 1130, may be determined as the second elevation angle.

FIG. 12 illustrates an example of determining a target azimuth angle of a target object based on an initial radar signal, according to one or more embodiments.

According to an example, operations 1210 and 1220 may be performed before operation 810 described above with reference to FIG. 8 is performed. Operations 1210 and 1220 may be performed by a radar signal processing apparatus (e.g., the radar signal processing apparatus 200 of FIG. 2).

In operation 1210, the radar signal processing apparatus may determine a target object based on the initial radar signal. For example, the radar signal processing apparatus may initially identify one or more objects by applying a range-Doppler processing algorithm to the initial radar signal. One of the identified one or more objects may be determined (used) as the target object.

In operation 1220, the radar signal processing apparatus may determine an azimuth angle with respect to the target object based on the initial radar signal. When φ is substituted with 0 in Equation 1, a spectrum for the azimuth angle of the target object may be obtained, and the azimuth angle of the target object may be determined (or estimated) by using the spectrum for the azimuth angle of the target object and a DOA estimation method.

According to an example, after the azimuth angle with respect to the target object is determined, operations 810 to 840 for determining the elevation angle with respect to the target object may be performed.

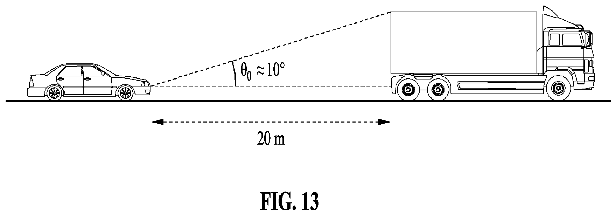

FIG. 13 illustrates an example of a case in which elevation angles are formed for one target object, according to one or more embodiments.

Since the estimation of the azimuth angle and the estimation of the elevation angle for the target object are performed after identifying the target object based on range and velocity information, it is common to determine one elevation angle with respect to one target object.

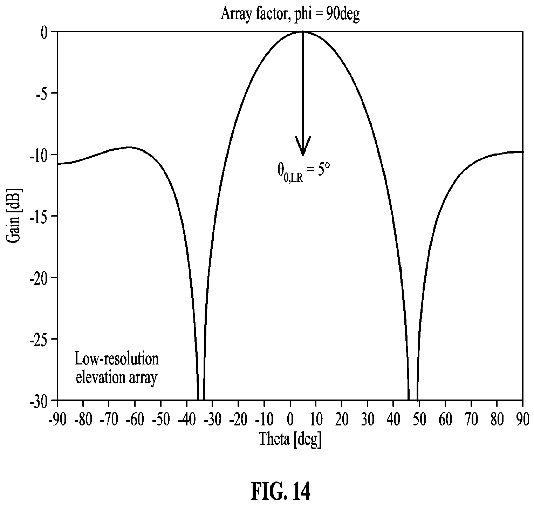

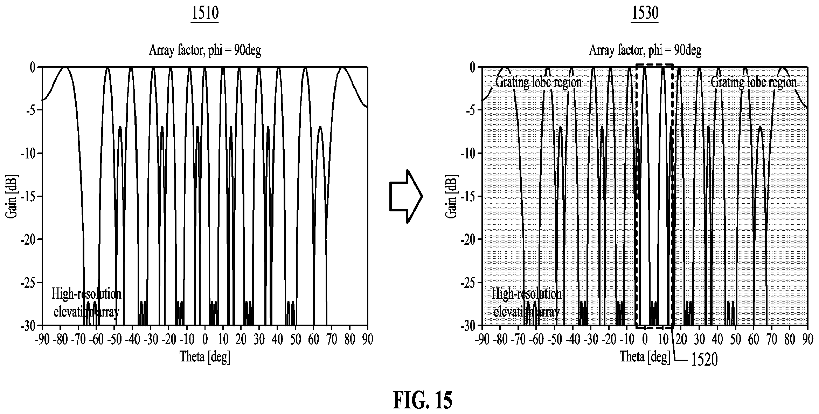

According to an example, when a large target object is close to a radar signal processing apparatus (e.g., the radar signal processing apparatus 200 of FIG. 2), elevation angles may be generated within a high-resolution DOA estimation spectrum (e.g., the first DOA estimation spectrum). For example, as shown in FIG. 13, when a vehicle including the radar signal processing apparatus is close to (e.g., 20 m) a truck, a rear portion of the truck may be identified as a target object, and the target object may be at 0° to 10° on an line of the elevation angle. For the example described above, a method of determining the elevation angle of the target object is described with reference to FIGS. 14 and 15.

FIG. 14 illustrates an example of a DOA estimation spectrum based on a first component of an initial radar signal generated for a target object that forms elevation angles, according to one or more embodiments.

According to a DOA estimation spectrum measured based on the first component of the initial radar signal according to an example shown with reference to FIG. 13, a peak of a main lobe generated in the DOA estimation spectrum may correspond to 5°. The first component of the initial radar signal may be obtained by the first virtual antenna element set 531 (or the first virtual antenna element set 631) of the virtual array antenna 530 (or the virtual array antenna 630). The target object is at 0° to 10° on the line of the elevation angle, however, in a low-resolution DOA estimation spectrum, 5°, between 0° to 10° may correspond to the peak of the main lobe. The first elevation angle may be determined as 5°.

FIG. 15 illustrates an example of a first DOA estimation spectrum based on a second component of an initial radar signal generated for a single target object that forms elevation angles, and a second DOA estimation spectrum generated by applying a angular window to the first DOA estimation spectrum, according to one or more embodiments.

According to an example shown in FIG. 13, a radar signal processing apparatus (e.g., the radar signal processing apparatus 200 of FIG. 2) may generate a first DOA estimation spectrum 1510 based on the second component of the initial radar signal. For example, the second component of the initial radar signal may be obtained by the second virtual antenna element set 532 (or the second virtual antenna element set 632) of the virtual array antenna 530 (or the virtual array antenna 630). A plurality of GLs may be generated within the first DOA estimation spectrum 1510.

According to an example, the radar signal processing apparatus may determine a angular window 1520 based on the first elevation angle. For example, the angular window 1520 may be determined as a region between 15° to -5°.

According to an example, the radar signal processing apparatus may generate a second DOA estimation spectrum 1530 by applying the angular window 1520 to the first DOA estimation spectrum 1510. A value (e.g., a gain value) of a remaining region of the second DOA estimation spectrum 1530 (a region other than the angular window 1520) may be 0. For example, a value of a region exceeding 15° and a region less than -5° of the second DOA estimation spectrum 1530 may be 0.

The radar signal processing apparatus may determine a second elevation angle based on the second DOA estimation spectrum 1530. For example, angles, 0° and 10°, that respectively correspond to peaks of two main lobes of the second DOA estimation spectrum 1530 may be determined as the second elevation angle.

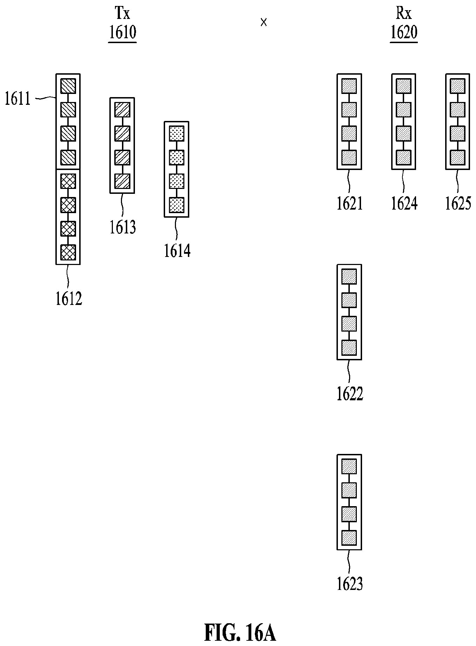

FIG. 16A illustrates an example of transmission antenna elements arranged in three columns and reception antenna elements arranged in three columns, according to one or more embodiments.

According to an example, a transmission antenna 1610 may include a first transmission antenna element set arranged on a first line. The transmission antenna 1610 may include a second transmission antenna element set arranged to be aligned on a second line parallel to the first line. The transmission antenna 1610 may include a third transmission antenna element set arranged to be aligned on a third line parallel to each of the first and second axes. The first, second, and third lines may be an line of an elevation angle and may be parallel to one another. For example, the first transmission antenna element set may include a first transmission antenna element 1611 and a second transmission antenna element 1612. For example, the second transmission antenna element set may include a third transmission antenna element 1613. For example, the third transmission antenna element set may include a fourth transmission antenna element 1614. Each of the first transmission antenna element 1611, the second transmission antenna element 1612, the third transmission antenna element 1613, and the fourth transmission antenna element 1614 may include four radiating elements.

Otherwise, the description of the transmission antenna 510, the first transmission antenna element 511, the second transmission antenna element 512, the third transmission antenna element 513, and the fourth transmission antenna element 514 described above with reference to FIG. 5A is generally applicable to the transmission antenna 1610, the first transmission antenna element 1611, the second transmission antenna element 1612, the third transmission antenna element 1613, and the fourth transmission antenna element 1614..

According to an example, a reception antenna 1620 may include a first reception antenna element set arranged to be aligned on a fourth line parallel to the first, second, and third lines. The reception antenna 1620 may include a second reception antenna element set arranged to be aligned on a fifth line parallel to each of the first, second, third, and fourth lines. The reception antenna 1620 may include a third reception antenna element set arranged to be aligned on a sixth line parallel to each of the first, second, third, fourth, and fifth lines. The fourth, fifth, and sixth lines may be an line of an elevation angle and may be parallel to one another. For example, the first reception antenna element set may include a first reception antenna element 1621, a second reception antenna element 1622, and a third reception antenna element 1623. For example, the second reception antenna element set may include a fourth reception antenna element 1624. For example, the third reception antenna element set may include a fifth reception antenna element 1625. Each of the first reception antenna element 1621, the second reception antenna element 1622, the third reception antenna element 1623, and the fourth reception antenna element 1624 may include four radiating elements. Otherwise, the description of the reception antenna 520, the first reception antenna element 521, the second reception antenna element 522, the third reception antenna element 523, the fourth reception antenna element 524, and the fifth reception antenna element 525 described above with reference to FIG. 5A is generally applicable to the reception antenna 1620, the first reception antenna element 1621, the second reception antenna element 1622, the third reception antenna element 1623, the fourth reception antenna element 1624, and the fifth reception antenna element 1625.

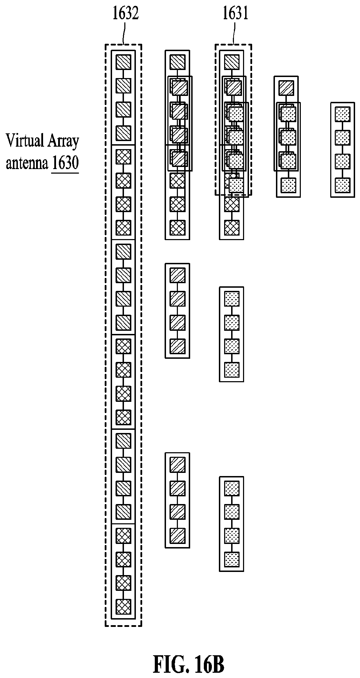

FIG. 16B illustrates an example of a virtual array antenna formed from the transmission antenna elements of FIG. 16A and the reception antenna elements of FIG. 16A, according to one or more embodiments.

The transmission antenna 1610 and the reception antenna 1620 may form a virtual array antenna 1630. The virtual array antenna 1630 may include a plurality of virtual antenna elements. The virtual array antenna 1630 may include the plurality of virtual antenna elements arranged in five columns by the transmission antenna 1610 arranged to have three columns and the reception antenna 1620 arranged to have three columns.

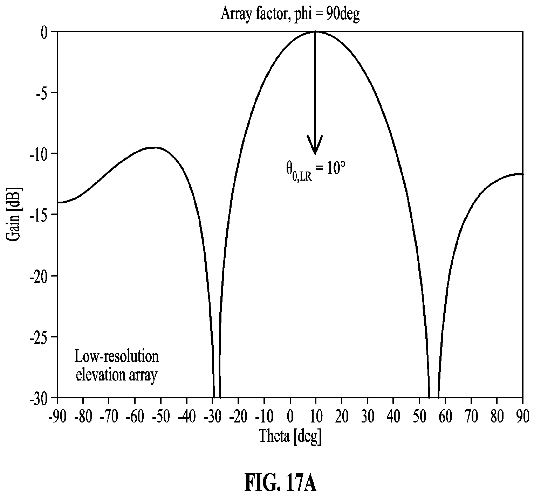

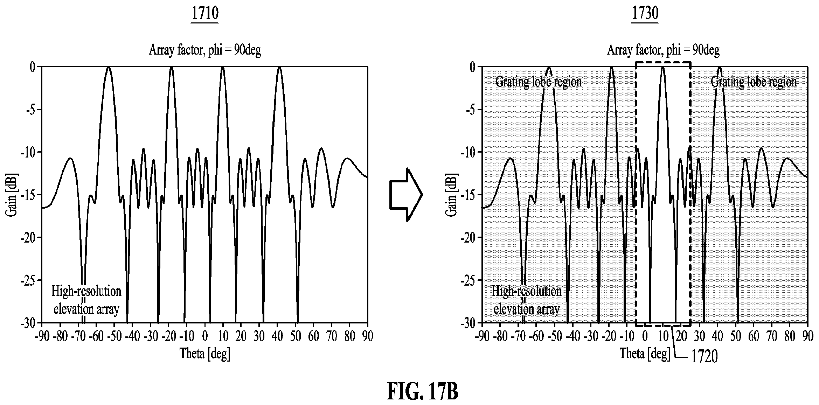

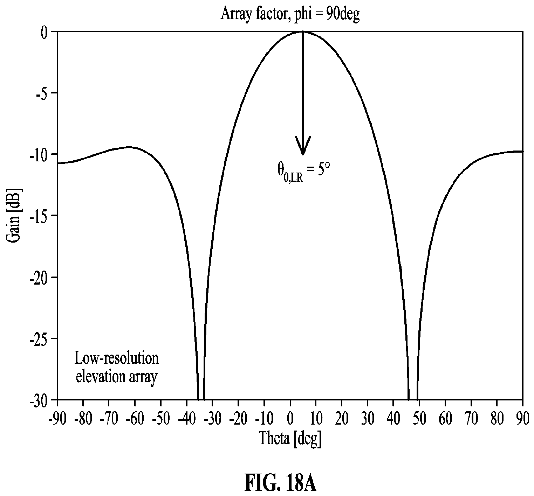

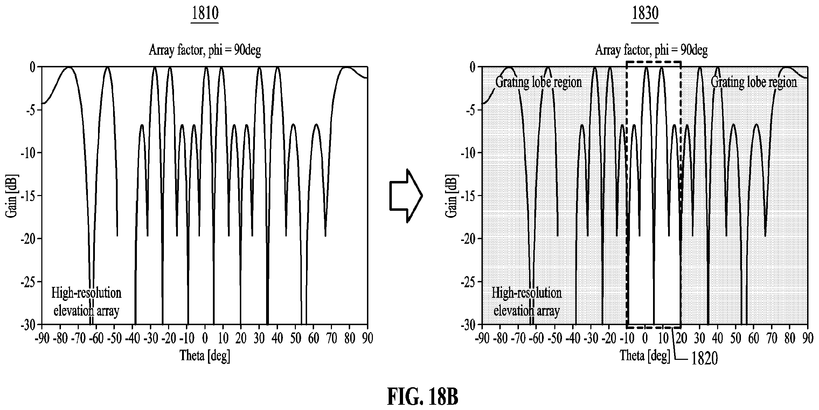

A radar signal received by the plurality of virtual antenna elements arranged in five columns may be used to measure the elevation angle. For example, a low-resolution DOA estimation spectrum for determining an elevation angle with respect to an object may be generated based on a first component of a radar signal corresponding to a first virtual antenna element set 1631 including at least a portion of the plurality of virtual antenna elements, arranged on the third line, of the virtual array antenna 1630. For example, a high-resolution DOA estimation spectrum for determining an elevation angle with respect to an object may be generated based on a second component of a radar signal corresponding to a second virtual antenna element set 1632 including the plurality of virtual antenna elements, arranged on the first line, of the virtual array antenna 1630. The elevation angle with respect to the object may be determined based on the low-resolution DOA estimation spectrum and the high-resolution DOA estimation spectrum. Hereinafter, a method of determining the elevation angle with respect to the object will be described in detail with reference to FIGS. 17A, 17B, 18A, and 18B.

FIG. 17A illustrates an example of a DOA estimation spectrum based on a first component of an initial radar signal generated for a target object by using the virtual array antenna of FIG. 16B.

According to an example, a radar signal processing apparatus (e.g., the radar signal processing apparatus 200 of FIG. 2) may generate a DOA estimation spectrum based on the first component of the initial radar signal generated by using the virtual array antenna 1630 of FIG. 16B. For example, the first component of the initial radar signal may be a signal obtained by the first virtual antenna element set 1631 of the virtual array antenna 1630.

According to the DOA estimation spectrum based on the first component of the initial radar signal generated by using the virtual array antenna of FIG. 16B, a peak of a main lobe generated in the DOA estimation spectrum may correspond to 10°. A first elevation angle may be determined as 10°.

FIG. 17B illustrates an example of a first DOA estimation spectrum based on a second component of an initial radar signal generated by using the virtual array antenna of FIG. 16B, and a second DOA estimation spectrum generated by applying a angular window to the first DOA estimation spectrum.

According to an example, a radar signal processing apparatus (e.g., the radar signal processing apparatus 200 of FIG. 2) may generate a first DOA estimation spectrum 1710 based on the second component of the initial radar signal generated by using the virtual array antenna of FIG. 16B. For example, the second component of the initial radar signal may be a signal obtained by the second virtual antenna element set 1632 of the virtual array antenna 1630. A plurality of GLs may be generated within the first DOA estimation spectrum 1710.

According to an example, the radar signal processing apparatus may determine a angular window 1720 based on the first elevation angle. For example, the angular window 1720 may be determined as a region between 25° to -5°.

According to an example, the radar signal processing apparatus may generate a second DOA estimation spectrum 1730 by applying the angular window 1720 to the first DOA estimation spectrum 1710. A value (e.g., a gain value) of a remaining region of the second DOA estimation spectrum 1730 other than the angular window 1720 may be 0. For example, a value of a region exceeding 25° and a region less than -5° of the second DOA estimation spectrum 1730 may be 0.

The radar signal processing apparatus may determine a second elevation angle based on the second DOA estimation spectrum 1730. For example, an angle, 10°, that corresponds to a peak of a main lobe of the second DOA estimation spectrum 1730 may be determined as the second elevation angle.

When an example described above with reference to FIG. 11 is compared to an example described above with reference to FIG. 17B, it may be found that, as the number of radiating elements included in an antenna element decreases, the angular window to be determined becomes relatively wider.

FIG. 18A illustrates an example of a DOA estimation spectrum based on a first component of an initial radar signal generated by using the virtual array antenna of FIG. 16B for a target object that forms a plurality of elevation angles.

In an example shown with reference to FIG. 13, according to the DOA estimation spectrum based on the first component of the initial radar signal generated by using the virtual array antenna of FIG. 16B, a peak of a main lobe generated in the DOA estimation spectrum may correspond to 5°. The first component of the initial radar signal may be a signal obtained by the first virtual antenna element set 1631 of the virtual array antenna 1630. The target object is at 0° to 10° on the line of the elevation angle, however, in a low-resolution DOA estimation spectrum, a value, 5°, between 0° to 10° may correspond to the peak of the main lobe. The first elevation angle may be determined as 5°.

FIG. 18B illustrates an example of a first DOA estimation spectrum based on a second component of an initial radar signal generated by using the virtual array antenna of FIG. 16B for one target object that forms a plurality of elevation angles, and a second DOA estimation spectrum generated by applying a angular window to the first DOA estimation spectrum.

According to an example shown with reference to FIG. 13, a radar signal processing apparatus (e.g., the radar signal processing apparatus 200 of FIG. 2) may generate a first DOA estimation spectrum 1810 based on the second component of the initial radar signal generated by using the virtual array antenna of FIG. 16B. For example, the second component of the initial radar signal may be a signal obtained by the second virtual antenna element set 1632 of the virtual array antenna 1630. A plurality of GLs may be generated within the first DOA estimation spectrum 1810.

According to an example, the radar signal processing apparatus may determine a angular window 1820 based on the first elevation angle. For example, the angular window 1820 may be determined as a region between 20° to -10°.

According to an example, the radar signal processing apparatus may generate a second DOA estimation spectrum 1830 by applying the angular window 1820 to the first DOA estimation spectrum 1810. A value (e.g., a gain value) of a remaining region of the second DOA estimation spectrum 1830 (region other than the angular window 1820) may be 0. For example, a value of a region exceeding 20° and a region less than -10° of the second DOA estimation spectrum 1830 may be 0.

The radar signal processing apparatus may determine a second elevation angle based on the second DOA estimation spectrum 1830. For example, angles, 0° and 10°, that respectively correspond to peaks of two main lobes of the second DOA estimation spectrum 1830 may be determined/used as the second elevation angle.

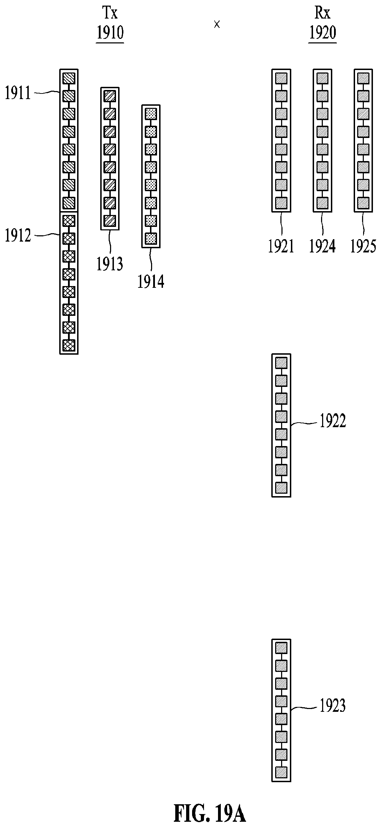

FIG. 19A illustrates an example of transmission antenna elements arranged in three columns and reception antenna elements arranged in three columns, according to one or more embodiments.

According to an example, a transmission antenna 1910 may include a first transmission antenna element set arranged on a first line. The transmission antenna 1910 may include a second transmission antenna element set arranged to be aligned on a second line parallel to the first line. The transmission antenna 1910 may include a third transmission antenna element set arranged to be aligned on a third line parallel to each of the first and second lines. The first, second, and third lines may be an line of an elevation angle and may be parallel to one another. For example, the first transmission antenna element set may include a first transmission antenna element 1911 and a second transmission antenna element 1912. For example, the second transmission antenna element set may include a third transmission antenna element 1913. For example, the third transmission antenna element set may include a fourth transmission antenna element 1914. Each of the first transmission antenna element 1911, the second transmission antenna element 1912, the third transmission antenna element 1913, and the fourth transmission antenna element 1914 may include eight radiating elements. Otherwise, the description of the transmission antenna 510, the first transmission antenna element 511, the second transmission antenna element 512, the third transmission antenna element 513, and the fourth transmission antenna element 514 described above with reference to FIG. 5A is generally applicable to the transmission antenna 1910, the first transmission antenna element 1911, the second transmission antenna element 1912, the third transmission antenna element 1913, and the fourth transmission antenna element 1914.

According to an example, a reception antenna 1920 may include a first reception antenna element set arranged to be aligned on a fourth line parallel to the first, second, and third lines. The reception antenna 1920 may include a second reception antenna element set arranged to be aligned on a fifth line parallel to each of the first, second, third, and fourth lines. The reception antenna 1920 may include a third reception antenna element set arranged to be aligned on a sixth line parallel to each of the first, second, third, fourth, and fifth lines. The fourth, fifth, and sixth lines may be an line of an elevation angle and may be parallel to one another. For example, the first reception antenna element set may include a first reception antenna element 1921, a second reception antenna element 1922, and a third reception antenna element 1923. For example, the second reception antenna element set may include a fourth reception antenna element 1924. For example, the third reception antenna element set may include a fifth reception antenna element 1925. Each of the first reception antenna element 1921, the second reception antenna element 1922, the third reception antenna element 1923, and the fourth reception antenna element 1924 may include eight radiating elements. Otherwise, the description of the reception antenna 520, the first reception antenna element 521, the second reception antenna element 522, the third reception antenna element 523, the fourth reception antenna element 524, and the fifth reception antenna element 525 described above with reference to FIG. 5A is generally applicable to the reception antenna 1920, the first reception antenna element 1921, the second reception antenna element 1922, the third reception antenna element 1923, the fourth reception antenna element 1924, and the fifth reception antenna element 1925.

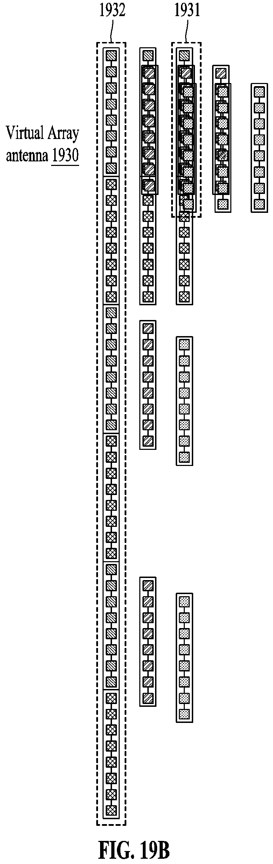

FIG. 19B illustrates an example of a virtual array antenna formed from the transmission antenna elements of FIG. 19A and the reception antenna elements of FIG. 19A, according to one or more embodiments.

The transmission antenna 1910 and the reception antenna 1920 may form a virtual array antenna 1930. The virtual array antenna 1930 may include virtual antenna elements. The virtual array antenna 1930 may include the virtual antenna elements arranged in five columns by the transmission antenna 1910 arranged to have three columns and the reception antenna 1920 arranged to have three columns.

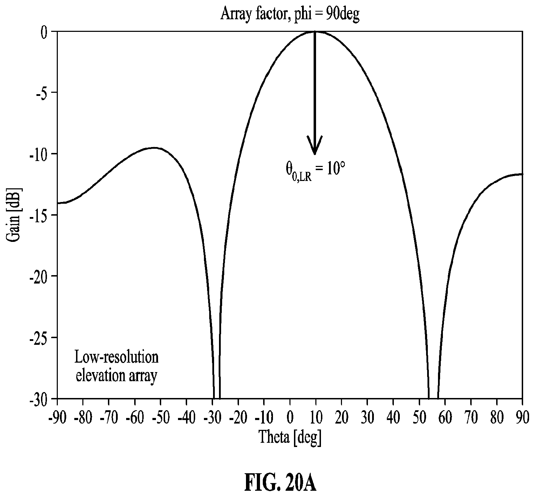

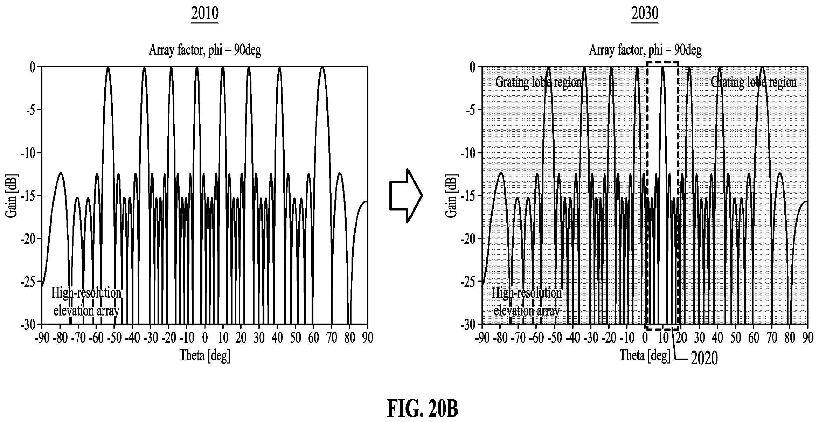

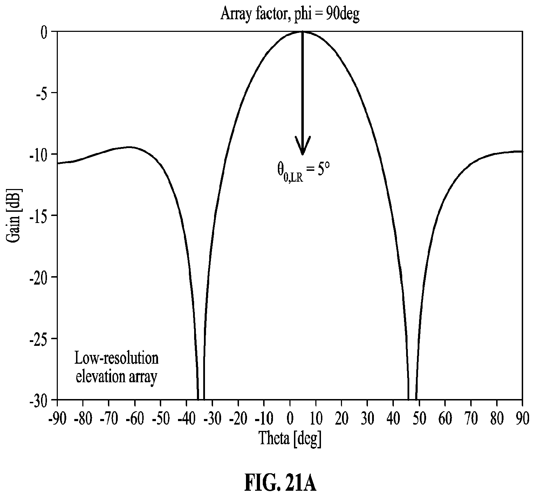

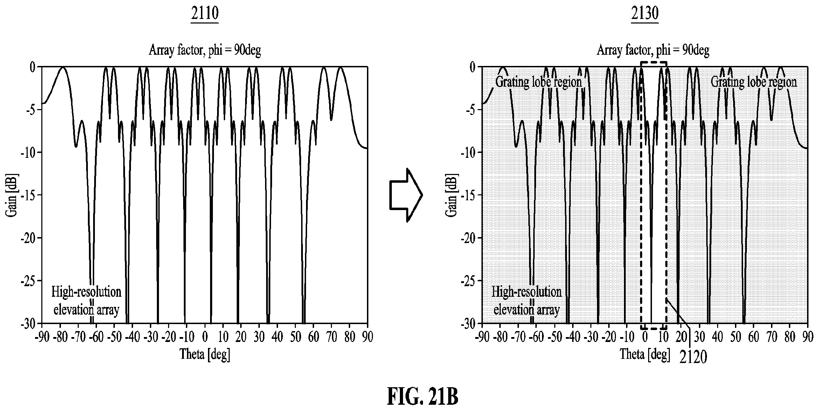

A radar signal received by the plurality of virtual antenna elements arranged in five columns may be used to measure the elevation angle. For example, a low-resolution DOA estimation spectrum for determining an elevation angle with respect to an object may be generated based on a first component of a radar signal corresponding to a first virtual antenna element set 1931 including at least a portion of the plurality of virtual antenna elements, arranged on the third line, of the virtual array antenna 1930. For example, a high-resolution DOA estimation spectrum (for determining an elevation angle with respect to an object) may be generated based on a second component of a radar signal corresponding to a second virtual antenna element set 1932 (which includes the virtual antenna elements, arranged on the first line, of the virtual array antenna 1930). The elevation angle with respect to the object may be determined based on the low-resolution DOA estimation spectrum and the high-resolution DOA estimation spectrum. A method of determining the elevation angle with respect to the object described with reference to FIGS. 20A, 20B, 21A, and 21B.

FIG. 20A illustrates an example of a DOA estimation spectrum based on a first component of an initial radar signal generated for a target object by using the virtual array antenna of FIG. 19B, according to one or more embodiments.

According to an example, a radar signal processing apparatus (e.g., the radar signal processing apparatus 200 of FIG. 2) may generate a DOA estimation spectrum and may do so based on the first component of the initial radar signal that is generated using the virtual array antenna 1930 of FIG. 19B. For example, the first component of the initial radar signal may be a signal obtained by the first virtual antenna element set 1931 of the virtual array antenna 1930.

According to the DOA estimation spectrum (which is based on the first component of the initial radar signal generated by using the virtual array antenna of FIG. 19B), a peak of a main lobe generated in the DOA estimation spectrum may correspond to 10°. Accordingly, a first elevation angle may be determined as 10°.

FIG. 20B illustrates an example of a first DOA estimation spectrum based on a second component of an initial radar signal generated by using the virtual array antenna of FIG. 19B, and a second DOA estimation spectrum generated by applying a angular window to the first DOA estimation spectrum, according to one or more embodiments.

According to an example, a radar signal processing apparatus (e.g., the radar signal processing apparatus 200 of FIG. 2) may generate a first DOA estimation spectrum 2010, and may do so based on the second component of the initial radar signal that is generated using the virtual array antenna of FIG. 19B. For example, the second component of the initial radar signal may be obtained by the second virtual antenna element set 1932 of the virtual array antenna 1930. Multiple GLs may be generated within the first DOA estimation spectrum 2010.

According to an example, the radar signal processing apparatus may determine a angular window 2020 based on the first elevation angle. For example, the angular window 2020 may be determined as a region between 15° to 5°.

According to an example, the radar signal processing apparatus may generate a second DOA estimation spectrum 2030 by applying the angular window 2020 to the first DOA estimation spectrum 2010. A value (e.g., a gain value) of a remaining region of the second DOA estimation spectrum 2030 (the region other than the angular window 2020) may be 0. For example, a value of a region exceeding 15° and a region less than 5° of the second DOA estimation spectrum 2030 may be 0.

The radar signal processing apparatus may determine a second elevation angle based on the second DOA estimation spectrum 2030. For example, an angle, 10°, that corresponds to a peak of a main lobe of the second DOA estimation spectrum 2030 may be determined as the second elevation angle.

Comparing the example described above with reference to FIG. 17B to the example described with reference to FIG. 20B, it may be seen that as the number of radiating elements included in an antenna element increases the angular window to be determined becomes narrower.

FIG. 21A illustrates an example of a DOA estimation spectrum based on a first component of an initial radar signal generated by using the virtual array antenna of FIG. 19B for a target object that forms a plurality of elevation angles, according to one or more embodiments.

In an example shown in FIG. 13, according to the DOA estimation spectrum (which is based on the first component of the initial radar signal generated by using the virtual array antenna of FIG. 19B), a peak of a main lobe generated in the DOA estimation spectrum may correspond to 5°. The first component of the initial radar signal may be a signal obtained by the first virtual antenna element set 1931 of the virtual array antenna 1930. The target object is at 0° to 10° on the line of the elevation angle, however, in a low-resolution DOA estimation spectrum, a value, 5°, between 0° to 10° may correspond to the peak of the main lobe. Thus, the first elevation angle may be determined as 5°.

FIG. 21B illustrates an example of a first DOA estimation spectrum based (i) on a second component of an initial radar signal (which is generated by using the virtual array antenna of FIG. 19B) for a single target object that forms multiple elevation angles, and (ii) a second DOA estimation spectrum generated by applying a angular window to the first DOA estimation spectrum, according to one or more embodiments.

According to the example of FIG. 13, a radar signal processing apparatus (e.g., the radar signal processing apparatus 200 of FIG. 2) may generate a first DOA estimation spectrum 2110, and may do so based on the second component of the initial radar signal that is generated by using the virtual array antenna of FIG. 19B. For example, the second component of the initial radar signal may be obtained by the second virtual antenna element set 1932 of the virtual array antenna 1930. A plurality of GLs may be generated within the first DOA estimation spectrum 2110.

According to an example, the radar signal processing apparatus may determine a angular window 2120 based on the first elevation angle. For example, the angular window 2120 may be determined as a region between 12° to -2°.

According to an example, the radar signal processing apparatus may generate a second DOA estimation spectrum 2130 by applying the angular window 2120 to the first DOA estimation spectrum 2110. A value (e.g., a gain value) of a remaining region of the second DOA estimation spectrum 2130 other than the angular window 2120 may be 0. For example, a value of a region exceeding 12° and a region less than -2° of the second DOA estimation spectrum 2130 may be 0.

The radar signal processing apparatus may determine a second elevation angle based on the second DOA estimation spectrum 2130. For example, angles, 0° and 10°, that respectively correspond to peaks of two main lobes of the second DOA estimation spectrum 2130 may be determined as the second elevation angle.

The computing apparatuses, the vehicles, the electronic devices, the processors, the memories, the image sensors, the vehicle/operation function hardware, the ADAS systems, the displays, the information output system and hardware, the storage devices, and other apparatuses, devices, units, modules, and components described herein with respect to FIGS. 1-21B are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a fieldprogrammable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-21B that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims and their equivalents, and all variations within the scope of the claims and their equivalents are to be construed as being included in the disclosure.

**Claims**

1.  A radar signal processing method performed by a radar signal processing apparatus, the radar signal processing method comprising:

    determining a first elevation angle with respect to a target object based on a first component of an initial radar signal received through an array antenna of a radar sensor;
    determining an angular window based on the first elevation angle;
    generating a second direction of arrival (DOA) estimation spectrum by applying the angular window to a first DOA estimation spectrum generated based on a second component of the initial radar signal; and
    determining a second elevation angle with respect to the target object based on the second DOA estimation spectrum.

**2.** The radar signal processing method of claim 1, wherein

the initial radar signal is generated based on a virtual array antenna formed from the array antenna, optionally wherein the virtual array antenna formed from the array antenna comprises:

a first virtual antenna element set arranged on a first line; and
a second virtual antenna element set arranged on a second line parallel to the first line.

**3.** The radar signal processing method of any one of claims 1-2, wherein the array antenna comprises:

a first transmission antenna element set aligned on a first line;
a second transmission antenna element set arranged on a second line parallel to the first line;
a third transmission antenna element set arranged on a third axis parallel to each of the first line and the second line;
a first reception antenna element set arranged on a fourth line parallel to each of the first line, the second line, and the third line;
a second reception antenna element set aligned on a fifth line parallel to each of the first line, the second line, the third line, and the fourth line; and
a third reception antenna element set aligned on a sixth line parallel to each of the first line, the second line, the third line, the fourth line, and the fifth line,
optionally wherein the first line, the second line, the third line, the fourth line, the fifth line, and the sixth line are on a same plane,
optionally wherein the first transmission antenna element set comprises a first transmission antenna element and a second transmission antenna element, and the first transmission antenna element and the second transmission antenna element are on the first line and adjacent to each other.

**4.** The radar signal processing method of claims 3, wherein

the first reception antenna element set comprises a first reception antenna element and a second reception antenna element, and
the first reception antenna element and the second reception antenna element are arranged on the fourth line and are spaced apart from each other.

**5.** The radar signal processing method of any one of claims 3-4, wherein

the initial radar signal is generated based on a virtual array antenna formed from the array antenna, and
the virtual array antenna comprises:

a first virtual antenna element set aligned on a first line;
a second virtual antenna element set aligned on a second line parallel to the first line;
a third virtual antenna element set arranged on a third line parallel to each of the first line and the second line;
a fourth virtual antenna element set arranged on a fourth line parallel to each of the first line, the second line, and the third line; and
a fifth virtual antenna element set arranged on a fifth line parallel to each of the first line, the second line, the third line, and the fourth line,

optionally wherein the first component of the initial radar signal corresponds to at least a portion of the third virtual antenna element set,
optionally wherein the second component of the initial radar signal corresponds to at least a portion of the first virtual antenna element set.

**6.** The radar signal processing method of any one of claims 1-5, wherein the determining of the angular window based on the first elevation angle comprises:

determining a first angle and a second angle based on the first elevation angle, a wave number;
determining a third angle that defines an upper bound of the angular window based on the first elevation angle and the first angle; and
determining a fourth angle that defines a lower bound of the angular window based on the first elevation angle and the second angle.

7. The radar signal processing method of any one of claims 1-6, further comprising:

determining the target object based on the initial radar signal; and
determining a target azimuth angle of the target object based on the initial radar signal, and
wherein, based on the target azimuth angle of the target object being determined, the first elevation angle is
determined.

8. The radar signal processing method of any one of claims 1-7, wherein the radar signal processing apparatus is
included in a vehicle.

9. The radar signal processing method of any one of claims 1-8, wherein the antenna array comprises a transmitter
element set and an receiver element set, wherein the transmitter element set comprises transmitter elements,
wherein the transmitter elements comprise respective lines of radiating elements, wherein the receiver element set
comprises receiver elements, wherein the receiver elements comprise respective lines of radiating elements, and
wherein the lines of radiating elements are parallel with respect to each other.

10. A radar signal processing apparatus for processing a radar signal, the radar signal processing apparatus comprising:

one or more processors; and
a memory storing a program that when executed by the one or more processors causes the one or more
processors to:

determine a first elevation angle with respect to a target object based on a first component of an initial radar
signal received through an array antenna of a radar sensor;
determine an angular window based on the first elevation angle;
generate a second direction of arrival (DOA) estimation spectrum by applying the window to a first DOA
estimation spectrum that is generated based on a second component of the initial radar signal; and
determine a second elevation angle based on the second DOA estimation spectrum.

11. The radar signal processing apparatus of claim 10, wherein the initial radar signal is generated based on a virtual array
antenna formed from the array antenna,
optionally wherein the virtual array antenna formed from the array antenna comprises:

first virtual antenna elements arranged on a first line; and
second virtual antenna elements arranged on a second line parallel to the first line.

12. An array antenna for a radar sensor, optionally for use in a radar signal processing method according to any one of
claims 1-9 and/or with a radar signal processing apparatus according to any one of claims 10-11, the array antenna
comprising:

a first transmission antenna element set arranged on a first line;
a second transmission antenna element set arranged on a second line parallel to the first line;
a third transmission antenna element set arranged on a third line parallel to each of the first line and the second
line;
a first reception antenna element set arranged on a fourth line parallel to each of the first line, the second line, and
the third line;
a second reception antenna element set arranged on a fifth line parallel to each of the first line, the second line, the
third line, and the fourth line; and
a third reception antenna element set arranged on a sixth line parallel to each of the first line, the second line, the
third line, the fourth line, and the fifth line.

13. The array antenna of claim 12,

wherein the first transmission antenna element set comprises a first transmission antenna element and a second
transmission antenna element, and the first transmission antenna element and the second transmission antenna
element are arranged on the first line and spaced apart from each other; and/or

wherein the first reception antenna element set comprises a first reception antenna element and a second reception antenna element, and the first reception antenna element and the second reception antenna element are arranged on the fourth line and adjacent each other.

14. A computer program product implementing a radar signal processing method according to any one of claims 1-9.

15. A vehicle comprising a radar signal processing apparatus for performing a radar signal processing method according to any one of claims 1-9 and/or according to any one of claims 10-11, and/or comprising an array antenna according to any one of claims 12-13.

**FIG. 1**

200

210

Radar sensor

220

Processor

**FIG. 2**

Tx          x          Rx          ⟹          Virtual Array
                                                antenna

$d_{element} \approx N\lambda/2$

$d_{Array} = d_{element}$

**FIG. 3A**

FIG. 3B

FIG. 4A

FIG. 4B

**FIG. 5A**

532        531

Virtual Array
antenna 530

**FIG. 5B**

Tx
610

x

Rx
620

621

622

623

624

611

614

615

612

613

**FIG. 6A**

FIG. 6B

**FIG. 7**

Start

810

Determine first elevation angle with respect to target
object based on first component of initial radar signal received through
array antenna of radar sensor

820

Determine window region based on first elevation angle

830

Generate second DOA estimation spectrum by applying window region
to first DOA estimation spectrum generated based on second component of
initial radar signal

840

Determine second elevation angle based on second DOA estimation spectrum

End

**FIG. 8**

FIG. 9

~1010

| |
|---|
| Determine first angle and second angle based on first elevation angle, wave number, and spacing between antenna elements |

~1020

| |
|---|
| Determine third angle that defines upper end of window region based on first elevation angle and first angle |

~1030

| |
|---|
| Determine fourth angle that defines lower end of window region based on first elevation angle and second angle |

**FIG. 10**

1110                                                    1130

Array factor, phi = 90deg                              Array factor, phi = 90deg

FIG. 11

```
                                                          ⟋1210
┌──────────────────────────────────────────────────────┐
│      Determine target object based on initial radar signal      │
└──────────────────────────────────────────────────────┘
                            │
                            ▼                             ⟋1220
┌──────────────────────────────────────────────────────┐
│   Determine target azimuth angle of target object based on   │
│                    initial radar signal                      │
└──────────────────────────────────────────────────────┘
                            │
                            ▼
                        To 810
```

## FIG. 12

$\theta_0 \approx 10°$

20 m

**FIG. 13**

FIG. 14

**FIG.15**

**FIG. 16A**

Virtual Array
antenna 1630

**FIG. 16B**

Array factor, phi = 90deg

$\theta_{0,LR} = 10°$

Low-resolution elevation array

Theta [deg]

**FIG. 17A**

1710

Array factor, phi = 90deg

1730

Array factor, phi = 90deg

**FIG. 17B**

Array factor, phi = 90deg

$\theta_{0,LR} = 5°$

Low-resolution
elevation array

Theta [deg]

Gain [dB]

**FIG. 18A**

FIG. 18B

Tx
<u>1910</u>

×

Rx
<u>1920</u>

**FIG. 19A**

FIG. 19B

Array factor, phi = 90deg

Low-resolution
elevation array

$\theta_{0,LR} = 10°$

Gain [dB] / Theta [deg]

**FIG. 20A**

2010

Array factor, phi = 90deg

2030

Array factor, phi = 90deg

FIG. 20B

FIG. 21A

FIG. 21B

EP 4 567 452 A1

Europäisches
Patentamt
European
Patent Office
Office européen
des brevets

# EUROPEAN SEARCH REPORT

**Application Number**

EP 24 19 1763

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/176189 A1 (EMADI MOHAMMAD [US] ET AL) 8 June 2023 (2023-06-08) <br> * paragraphs [0004], [0014], [0051], [0053], [0056], [0058], [0060] - [0064], [0068] - [0070]; figures 3, 4 * <br> ----- | 1-15 | INV. <br> G01S7/03 <br> G01S13/42 <br> G01S13/931 <br> G01S7/28 |
| A | US 2020/371229 A1 (LEVITAN EVGENY [IL] ET AL) 26 November 2020 (2020-11-26) <br> * paragraphs [0042], [0068] - [0070], [0089], [0109]; figures 9-11 * <br> ----- | 1-15 | |

**TECHNICAL FIELDS SEARCHED (IPC)**

G01S

The present search report has been drawn up for all claims

| Place of search | Date of completion of the search | Examiner |
|---|---|---|
| Munich | 14 November 2024 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 1763

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2024

| Patent document cited in search report | Publication date | Patent family member(s) | Publication date |
|---|---|---|---|
| US 2023176189 A1 | 08-06-2023 | NONE | |
| US 2020371229 A1 | 26-11-2020 | IL 266846 A | 30-11-2020 |
| | | US 2020371229 A1 | 26-11-2020 |

EPO FORM P0459

For more details about this annex : see Official Journal of the European Patent Office, No. 12/82